(19) 

Europäisches
Patentamt

European
Patent Office

Office européen
des brevets

(11)  **EP 4 640 643 A1**

(12) **EUROPEAN PATENT APPLICATION**
published in accordance with Art. 153(4) EPC

(43) Date of publication:
**29.10.2025  Bulletin 2025/44**

(21) Application number: **23832936.1**

(22) Date of filing: **15.06.2023**

(51) International Patent Classification (IPC):
**C03B 27/03** $^{(2006.01)}$      **C03C 10/00** $^{(2006.01)}$
**C03C 10/02** $^{(2006.01)}$

(52) Cooperative Patent Classification (CPC):
**C03C 3/066; C03B 27/03; C03C 3/068;
C03C 10/0054; C03C 21/002**

(86) International application number:
**PCT/CN2023/100450**

(87) International publication number:
**WO 2024/130985 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022  CN 202211666239**

(71) Applicant: **Chongqing Aureavia Hi-Tech Glass
Co., Ltd.
Chongqing 400714 (CN)**

(72) Inventors:
• **ZHOU, Jingpeng**
  **Chongqing 400714 (CN)**
• **TIAN, Qian**
  **Chongqing 400714 (CN)**
• **HUANG, Hao**
  **Chongqing 400714 (CN)**
• **XIE, Xiaolan**
  **Chongqing 400714 (CN)**
• **XIANG, Wenhao**
  **Chongqing 400714 (CN)**

(74) Representative: **IPAZ
Bâtiment Platon
Parc Les Algorithmes
91190 Saint-Aubin (FR)**

(54)  **REINFORCED MICROCRYSTALLINE GLASS WITH HIGH SCRATCH RESISTANCE**

(57)    The present application discloses a strengthened microcrystalline glass having a high scratch resistance comprising a compressive stress layer and a tensile stress layer. The glass has a main crystalline phase of $(Zn, Mg)Al_2O_4$ and comprises $Na_2O$. It has a surface $K_2O$ concentration of $\geq 7.00$ wt%. Along the thickness direction of the glass, the glass has a depth of $\geq 0.07t$, preferably $0.07t$ to $0.10t$, which is from any surface of the glass to a location close to that surface and having the same potassium (K) concentration as that at the center of the glass, wherein t is the thickness of the glass. The strengthened microcrystalline glass has an excellent scratch resistance comparable to that of sapphire glass.

Figure 12

EP 4 640 643 A1

**Description**

This application claims the benefit of priority to Chinese Patent Application No. 202211666239.3 filed before the CNIPA on December 23, 2022, titled "A STRENGTHENED MICROCRYSTALLINE GLASS WITH HIGH SCRATCH RESISTANCE", which is incorporated herein by reference in its entirety.

**TECHNICAL FIELD**

The present application relates to the technical field of glass materials, in particular to a strengthened microcrystalline glass with high scratch resistance.

**BACKGROUND**

Glass has gradually replaced plastic as a protective cover for portable electronic devices due to its excellent optical properties. As a protective cover, a housing material and the like for portable electronic products such as smartphones, smartwatches, and tablet computers, it is required to have excellent scratch resistance. Currently, sapphire glass is a material having relatively excellent compression resistance and scratch resistance. However, it is difficult for sapphire glass to be produced and processed, and its processing cost is high. Moreover, sapphire glass has a low tolerance to defects, and is extremely fragile. A common glass has low scratch resistance. Even a microcrystalline glass, in which crystalline phases such as lithium disilicate and petalite are precipitated, has limited improvement in scratch resistance, failing to meet the performance requirements of higher-end products.

Zinc-magnesium spinel crystal has become a preferred crystalline phase for improving scratch resistance of glass due to its high Young's modulus and shear modulus.

CN publication No. 111615500A discloses a transparent gahnite-spinel glass-ceramic with spinel as a main crystalline phase. This glass-ceramic has a Young's modulus of more than or equal to about 98.0 GPa to less than or equal to about 114.0 GPa and a hardness of more than or equal to about 9.0 GPa to less than or equal to about 11.2 GPa. Although the scratch resistance of the glass-ceramic in the publication is greatly improved compared to the existing microcrystalline glass, there is still a need to further improve scratch resistance, as well as Young's modulus and hardness of microcrystalline glass.

**SUMMARY**

In view of the above deficiencies in the art, the present invention aims to provide a strengthened microcrystalline glass having high scratch resistance, so as to solve the problem of low scratch resistance of microcrystalline glass in the art.

To solve the above technical problem, the technical solutions according to the present application are as follows.

In a first aspect, the present application provides a strengthened microcrystalline glass having a high scratch resistance comprising a compressive stress layer and a tensile stress layer. The strengthened microcrystalline glass has a main crystalline phase of $(Zn, Mg)Al_2O_4$. The strengthened microcrystalline glass comprises $Na_2O$. The strengthened microcrystalline glass has a surface $K_2O$ concentration of $\geq 7.00$ wt%, preferably 7.00 wt% to 15.00 wt%. Along the thickness direction of the strengthened microcrystalline glass, the glass has a depth of $\geq 0.07t$, preferably 0.07t to 0.10t, which is from any surface of the strengthened microcrystalline glass to a location close to that surface and having a same potassium (K) concentration as that at the center of the strengthened microcrystalline glass, wherein t is a thickness of the strengthened microcrystalline glass. Preferably, at a thickness of 0.7 mm, the strengthened microcrystalline glass has a single-rod static pressure of more than or equal to 450 N, preferably 450 N to 650 N.

Preferably, the strengthened microcrystalline glass has a Young's modulus not less than 110 GPa, preferably 110 GPa to 130 GPa.

Preferably, the strengthened microcrystalline glass has a Vickers hardness not less than 750 kgf/mm$^2$, preferably 750 kgf/mm$^2$ to 900 kgf/mm$^2$, more preferably 800 kgf/mm$^2$ to 900 kgf/mm$^2$.

Preferably, the strengthened microcrystalline glass has an average grain size of $\leq 15.00$ nm, preferably 1.00 nm to 10.00 nm, more preferably 4.50 nm to 8.00 nm.

Preferably, the strengthened microcrystalline glass has a crystal content of 20.00 wt% to 50.00 wt%, preferably 25.00 wt% to 50.00 wt%, more preferably 25.00 wt% to 45.00 wt%.

Preferably, the strengthened microcrystalline glass has a secondary crystalline phase comprising one or more of tetragonal $ZrO_2$, $Zn_2SiO_4$, and $Mg_2SiO_4$.

Preferably, the strengthened microcrystalline glass is transparent in the range of a visible light.

Preferably, the strengthened microcrystalline glass has no scratch on its surface if the surface of the strengthened microcrystalline glass is scratched with a gem mineral hardness pen having a Mohs hardness grade of 7, fixed on an automatic pencil hardness tester at an angle of 45°, under a load of 750 g, and the scratched surface of the microcrystalline glass is observed under a 400x microscope.

Preferably, the tensile stress layer of the strengthened microcrystalline glass comprises the following components in terms of mass percentage of oxide: $30.00\% \leq SiO_2 < 35.00\%$; 30.00% to 40.00% of $Al_2O_3$; 10.00% to 12.00% of ZnO; 2.00% to 4.00% of MgO; 5.00% to 7.00% of $ZrO_2$; 2.00% to 9.00% of $Na_2O$; 0 to 2.00% of $Li_2O$; and 0 to 8.00% of $B_2O_3$. At the same time, the components of the tensile stress layer of the strengthened microcrystalline glass meet the following conditions:

$$(1)\ X = ((Na_2O+B_2O_3)/ZrO_2)/Al_2O_3,$$

wherein $X \geq 2.00$;

$$(2)\ Y = \ln\left[(Na_2O+B_2O_3)/ZrO_2\right],$$

wherein $Y \geq 0$; and

$$(3)\ Z = (SiO_2+Al_2O_3-MgO-ZnO)/(Li_2O+Na_2O+B_2O_3),$$

wherein $4.00 \leq Z \leq 10.00$, and
in equations (1) to (3), the oxides represent the mass percentages of the oxide components.

Preferably, the components of the tensile stress layer of the strengthened microcrystalline glass further meet the following condition:

$$(4)\ W = (0.8\times(Al_2O_3-SiO_2)+1.5\times(ZnO-MgO))/ZrO_2,$$

wherein $0 \leq W \leq 3.00$; in equation (4), the oxides represent the mass percentages of the oxide components.

Preferably, in the tensile stress layer of the strengthened microcrystalline glass, the mass percentage of $SiO_2$ is 32.00% to 34.95%; and/or the mass percentage of $Al_2O_3$ is 32.00% to 38.00%; and/or the mass percentage of ZnO is 10.00% to 11.48%; and/or the mass percentage of MgO is 2.50% to 3.50%; and/or the mass percentage of $ZrO_2$ is 5.40% to 6.50%; and/or the mass percentage of $Na_2O$ is 2.50% to 8.50%; and/or the mass percentage of $B_2O_3$ is 2.50% to 8.00%.

Preferably, the tensile stress layer of the strengthened microcrystalline glass further comprises 0 to 3.00 wt% of BaO and/or 0 to 2.00 wt% of $Y_2O_3$.

Preferably, the strengthened microcrystalline glass is substantially free of $TiO_2$ and $P_2O_5$.

Preferably, the strengthened microcrystalline glass is obtained by subjecting a microcrystalline glass to be chemically strengthened to a chemical strengthening treatment. It should be understood that the composition of the microcrystalline glass to be chemically strengthened is substantially the same as that of the tensile stress layer of the strengthened microcrystalline glass in terms of mass percentage of oxide.

Preferably, the strengthened microcrystalline glass is obtained by placing the microcrystalline glass to be chemically strengthened in a salt bath containing a potassium salt at 380°C to 550°C for 1 h to 96 h, preferably 1 h to 48 h, wherein the potassium salt comprises one or more of potassium nitrate, potassium sulphate, and potassium carbonate, preferably potassium nitrate.

In a second aspect, the present application also provides a microcrystalline glass to be chemically strengthened for the preparation of the above strengthened microcrystalline glass. The microcrystalline glass to be chemically strengthened has a main crystalline phase of $(Zn, Mg)Al_2O_4$. In the microcrystalline glass to be chemically strengthened, the molar percentage of $Al_2O_3$ is more than the sum of the molar percentages of MgO and ZnO in terms of the molar percentage of the oxides. The microcrystalline glass to be chemically strengthened has a theoretical crystallinity of at least 30.00 wt%, preferably 30.00 wt% to 50.00 wt%, and if the microcrystalline glass to be chemically strengthened meets the theoretical crystallinity, the microcrystalline glass has a dissociation energy U per unit volume of a residual glass phase not less than 71.00 kJ·cm$^{-3}$, preferably 71.00 kJ·cm$^{-3}$ to 134.00 kJ·cm$^{-3}$.

Preferably, the microcrystalline glass to be chemically strengthened comprises the following components in terms of mass percentage of oxide: $30.00\% \leq SiO_2 < 35.00\%$; 30.00% to 40.00% of $Al_2O_3$; 10.00% to 12.00% of ZnO; 2.00% to 4.00% of MgO; 5.00% to 7.00% of $ZrO_2$; 2.00% to 9.00% of $Na_2O$; 0 to 2.00% of $Li_2O$; and 0 to 8.00% of $B_2O_3$. At the same time, the components of the microcrystalline glass to be chemically strengthened meet the following conditions:

$$(1) \quad X = ((Na_2O+B_2O_3)/ZrO_2)/Al_2O_3,$$

wherein X≥2.00;

$$(2) \quad Y = \ln[(Na_2O+B_2O_3)/ZrO_2],$$

wherein Y≥0; and

$$(3) \quad Z = (SiO_2+Al_2O_3-MgO-ZnO)/(Li_2O+Na_2O+B_2O_3),$$

wherein 4.00≤Z≤10.00, and
in equations (1) to (3), the oxides represent the mass percentages of the oxide components.

Preferably, the components of the microcrystalline glass to be chemically strengthened further meet the following condition:

$$(4) \quad W = (0.8\times(Al_2O_3-SiO_2)+1.5\times(ZnO-MgO))/ZrO_2,$$

wherein 0≤W≤3.00; in equation (4), the oxides represent the mass percentages of the oxide components.

Preferably, the microcrystalline glass to be chemically strengthened has a Young's modulus of not less than 110 GPa, preferably 110 GPa to 140 GPa.

Preferably, the microcrystalline glass to be chemically strengthened has an average grain size of ≤15.00 nm, preferably 1.00 nm to 10.00 nm, more preferably 4.50 nm to 8.00 nm.

Preferably, the microcrystalline glass to be chemically strengthened has a crystal content of 20.00 wt% to 50.00 wt%, preferably 25.00 wt% to 50.00 wt%, more preferably 25.00 wt% to 45.00 wt%.

Preferably, the microcrystalline glass to be chemically strengthened has a secondary crystalline phase comprising one or more of tetragonal $ZrO_2$, $Zn_2SiO_4$, and $Mg_2SiO_4$.

Preferably, the microcrystalline glass to be chemically strengthened further comprises 0 to 3.00 wt% of BaO and/or 0 wt% to 2.00 wt% of $Y_2O_3$.

Preferably, the microcrystalline glass to be chemically strengthened is substantially free of $TiO_2$ and $P_2O_5$.

In a third aspect, the present application also provides a glass device made from the above strengthened microcrystalline glass or from the above microcrystalline glass to be chemically strengthened.

In a fourth aspect, the present invention also provides an electronic device comprising the above strengthened microcrystalline glass or the above microcrystalline glass to be chemically strengthened.

The present application has the following beneficial effects over the prior art.

The present inventors carry out an in-depth study on the intrinsic strength of the microcrystalline glass and the stress characteristics of the strengthened microcrystalline glass, and obtain a strengthened microcrystalline glass having an excellent scratch resistance by strengthening a microcrystalline glass of a specific system having a high intrinsic strength to meet specific stress characteristics. In the present application, since the strengthened microcrystalline glass has a high surface $K_2O$ concentration and a high potassium-sodium exchange depth, the strengthened microcrystalline glass has excellent surface stress and deep stress characteristics. In view of the original high intrinsic strength of the microcrystalline glass, the strengthened microcrystalline glass of the present application ultimately achieves greatly improved mechanical properties, enabling the strengthened microcrystalline glass to achieve a scratch resistance effect comparable to that of sapphire glass. Based on the excellent mechanical properties and scratch resistance effect, the strengthened microcrystalline glass of the present application can meet the application requirements of glass covers for high-end electronic products.

For the microcrystalline glass to be chemically strengthened, the present inventors optimize formulation and adjust oxide types and the content of each oxide in the formulation system. On the one hand, the difficulty of melting the base glass is reduced and the temperature for heat treating the base glass to obtain the microcrystalline glass to be chemically strengthened is reduced. In addition, the difficulty of mass production of the microcrystalline glass to be chemically strengthened is reduced. The base glass can be mass-produced by conventional continuous melting, calendering, and the like from the glass formulation provided by the present application, ensuring the moldability of the base glass. Moreover, the base glass obtained from the glass formulation of the present application can be used to produce a transparent microcrystalline glass to be chemically strengthened having a main crystalline phase of zinc-magnesium spinel solid solution and good optical properties at a heat treatment temperature not exceeding 800°C. Compared with the prior arts, the heat treatment temperature can be significantly reduced by using the formulation system provided by the present application, thereby reducing the difficulty of mass production of spinel microcrystalline glass and thus improving the mass-producibility of spinel microcrystalline glass. On the other hand, by utilizing the synergistic effect of each oxide component in a specific content, the intrinsic strength of the residual glass phase in the microcrystalline glass to be chemically strengthened is improved while the desired content of the target main crystalline phase $(Zn, Mg)Al_2O_4$ is obtained. By combining the main crystalline phase $(Zn, Mg)Al_2O_4$ having a high Young's modulus and a high shear modulus with the residual glass phase having a high intrinsic strength, the final microcrystalline glass to be chemically strengthened possesses a high intrinsic strength and superior mechanical properties, such as scratch resistance, compared to those of the existing spinel-system microcrystalline glass.

## BRIEF DESCRIPTION OF THE DRAWINGS

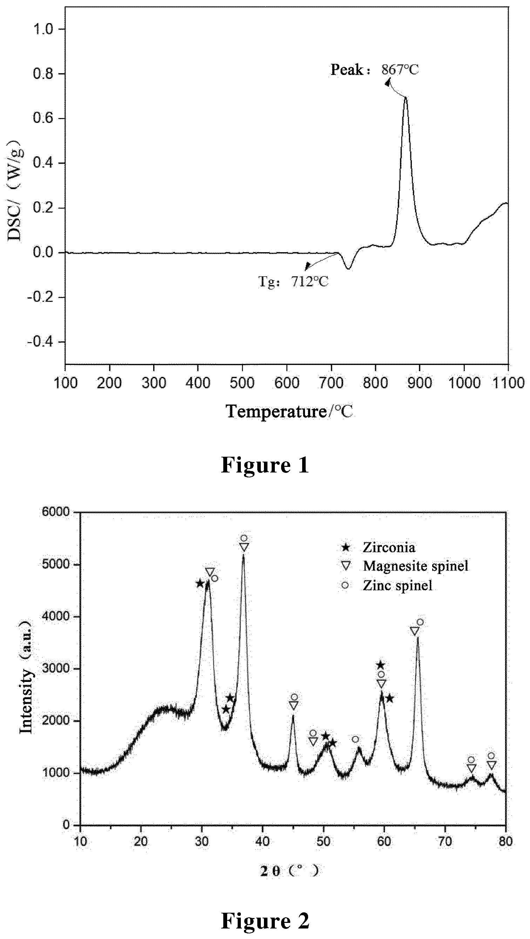

FIG. 1 shows a TGA profile of the base glass in Example S4.

FIG. 2 shows an XRD pattern of the microcrystalline glass to be chemically strengthened sample in Example S1.

FIG. 3 shows a transmittance profile of the microcrystalline glass to be chemically strengthened sample in Example S1.

FIG. 4 shows images of the scratch effects of the microcrystalline glass to be chemically strengthened in Example S1 in scratch experiments under different conditions, wherein:

(a) corresponds to an experimental condition of R1: a gem mineral hardness pen having a Mohs hardness grade of 7 and a load of 250 g;

(b) corresponds to an experimental condition of R2: a gem mineral hardness pen having a Mohs hardness grade of 7 and a load of 500 g;

(c) corresponds to an experimental condition of R3: a gem mineral hardness pen having a Mohs hardness grade of 6 and a load of 750 g.

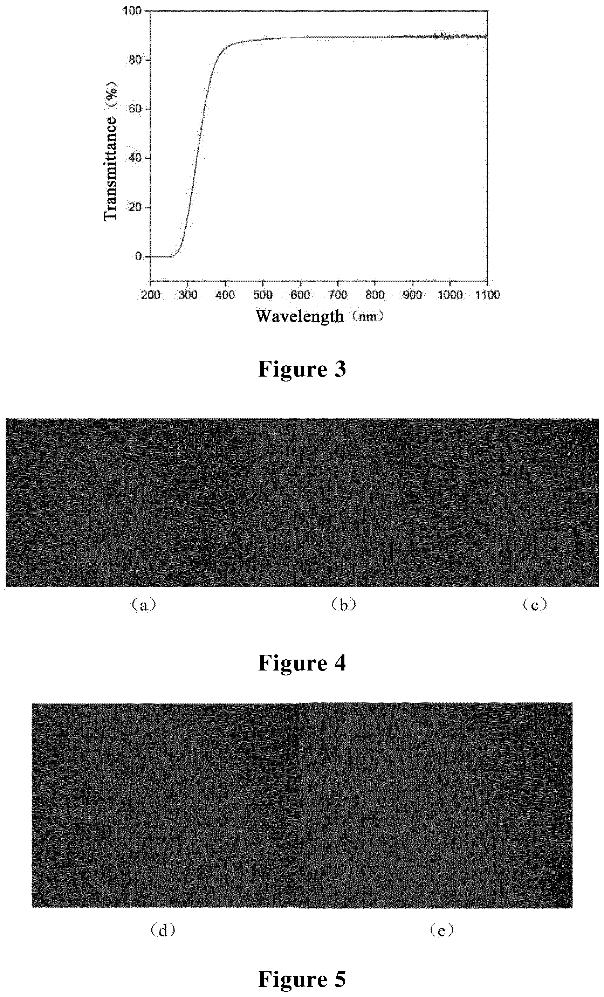

FIG. 5 shows images of the scratch effect of the microcrystalline glass to be chemically strengthened in Examples S2 and S8 in scratch experiments under an experimental condition of R4, wherein,

the experimental condition of R4 includes a gem mineral hardness pen having a Mohs hardness grade of 7 and a load of 750 g;

(d) corresponds to the microcrystalline glass to be chemically strengthened in Example S2, and (e) corresponds to the microcrystalline glass to be chemically strengthened in Example S8.

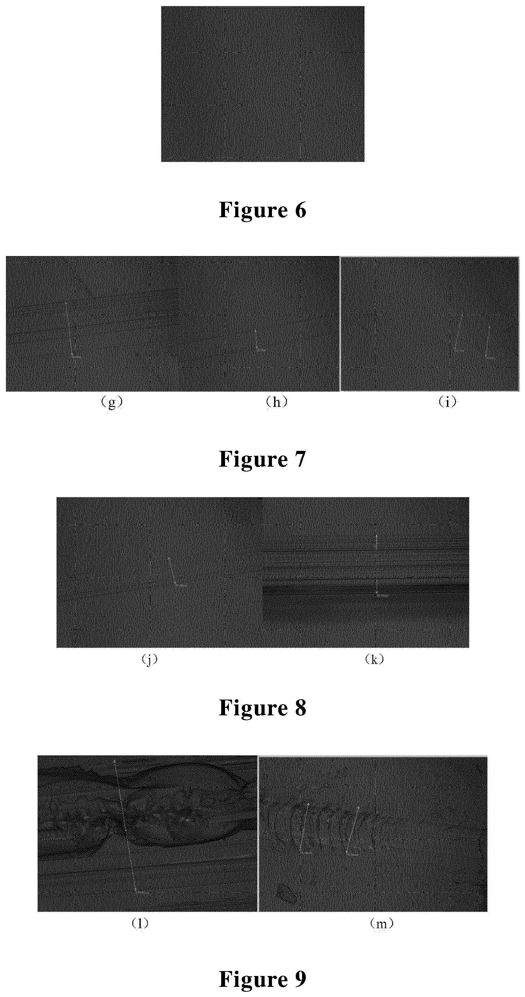

FIG. 6 shows an image of the scratch effect of the strengthened microcrystalline glass in Example S1 in a scratch experiment under an experimental condition of R4, wherein,

the experimental condition of R4 includes a gem mineral hardness pen having a Mohs hardness grade of 7 and a load of 750 g.

FIG. 7 shows images of the scratch effects of the strengthened microcrystalline glass and sapphire glass in Examples S2 and S8 in scratch experiments under an experimental condition of R5, wherein,

the experimental condition of R5 includes a gem mineral hardness pen having a Mohs hardness grade of 8 and a load of 750 g;

(g) corresponds to the strengthened microcrystalline glass in Example S2, (h) corresponds to the strengthened microcrystalline glass in Example S8, and (i) corresponds to sapphire glass.

FIG. 8 shows images of the scratch effects of the strengthened microcrystalline glass in Comparative Examples D1 and D2 in scratch experiments under an experimental condition of R4, wherein, the experimental condition of R4 includes a gem mineral hardness pen having a Mohs hardness grade of 7 and a load of 750 g;

(j) corresponds to the strengthened microcrystalline glass in Comparative Example D1, and (k) corresponds to the strengthened microcrystalline glass in Comparative Example D2.

FIG. 9 shows an image of the scratch effect of the microcrystalline glass to be chemically strengthened in Comparative Example D6 in a scratch experiment under an experimental condition of R3, wherein, the experimental condition of R3 includes a gem mineral hardness pen having a Mohs hardness grade of 6 and a load of 750 g;

(1) corresponds to the indentation pattern produced at the head of the scratch for the microcrystalline glass to be chemically strengthened in Comparative Example D6, and (m) corresponds to the fish scale spot pattern produced at the middle of the scratch for the microcrystalline glass to be chemically strengthened in Comparative Example D6.

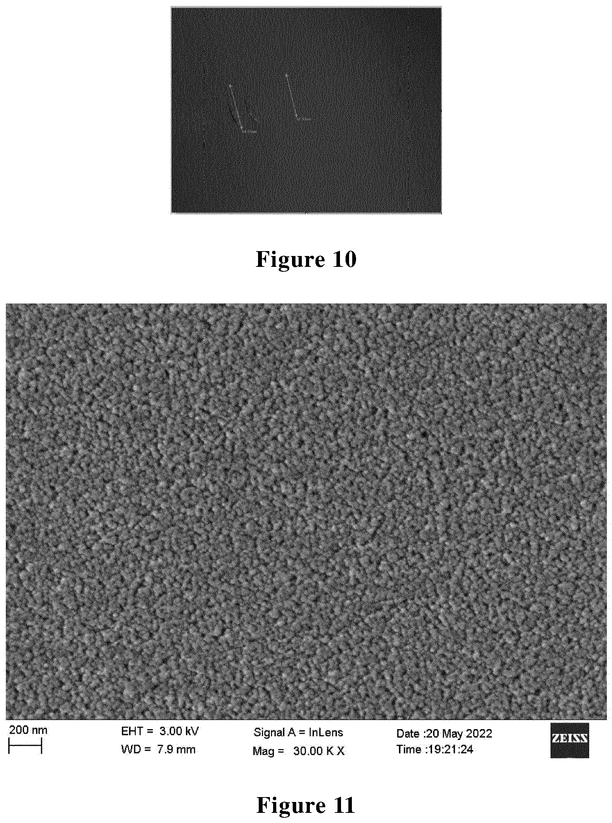

FIG. 10 shows an image of the scratch effect of the strengthened microcrystalline glass in Comparative Example D6 in a scratch experiment under an experimental condition of R3, wherein, the experimental condition of R3 includes a gem mineral hardness pen having a Mohs hardness grade of 6 and a load of 750 g.

FIG. 11 shows an SEM image of the microcrystalline glass to be chemically strengthened in Example S3.

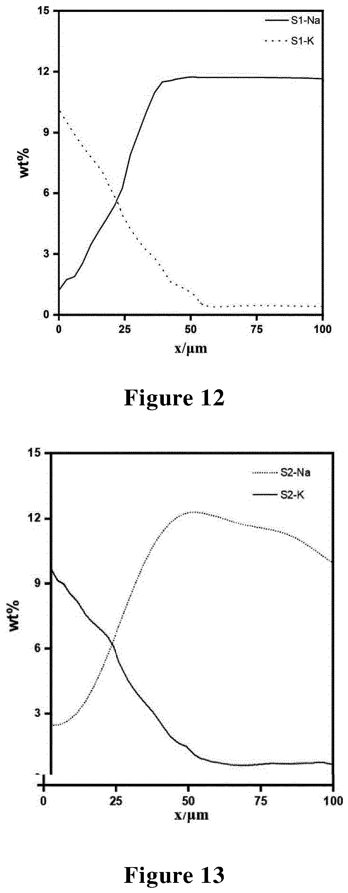

FIG. 12 shows plots of $Na_2O$ and $K_2O$ concentrations vs a thickness of cross-section, measured by an electron microprobe, of the strengthened microcrystalline glass in Example S1.

FIG. 13 shows plots of $Na_2O$ and $K_2O$ concentrations vs a thickness of cross-section, measured by an electron microprobe, of the strengthened microcrystalline glass in Example S2.

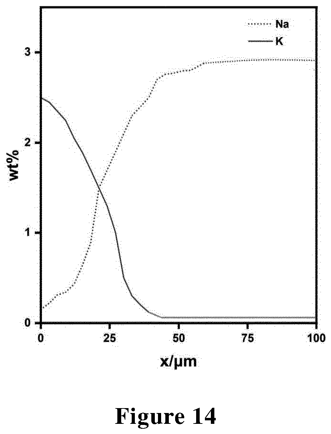

FIG. 14 shows plots of $Na_2O$ and $K_2O$ concentrations vs a thickness of cross-section, measured by an electron microprobe, of the strengthened microcrystalline glass in Comparative Example D2.

## DETAILED DESCRIPTION

I. The relevant specialized terms and the relevant measurement methods involved in the present application are explained as follows.

Base glass: it is a glass that has not been subjected to nucleation treatment, crystallization treatment, and strengthening treatment.

Microcrystalline glass: it is also known as glass-ceramic, which is a solid composite material containing both glass phase and crystalline phase (also known as microcrystalline phase, crystallization phase or crystal phase) prepared by targeted controlled crystallization of the base glass.

Strengthened microcrystalline glass: it is a solid composite material obtained by subjecting a microcrystalline glass to a chemical strengthening treatment. When the chemical strengthening treatment is performed at high temperature, alkali metal ions with large ionic radius (e.g., potassium ion, sodium ion) in the salt bath/molten salt may replace alkali metal ions with small ionic radius (e.g., sodium ion, lithium ion) in the microcrystalline glass, resulting in a volume difference between exchanged ions and thus generating a compressive stress on the surface of the microcrystalline glass.

Residual glass phase: it is an amorphous phase part in a microcrystalline glass system. A microcrystalline glass contains both crystalline phase and residual glass phase.

Dissociation energy: it is generally referred to as dissociation energy of a molecule, which is the smallest energy absorbed from surroundings by a molecule at the lowest energy state when the molecule decomposes into completely independent atoms, and is also the energy required for bond breakage.

Nucleation: it is a process in which nucleating material in glass grows into small crystalline nucleuses by heat treatment.

Crystallization: it is a process in which a certain type of crystal grows from a nucleus by heat treatment.

Crystalline phase: a crystalline phase is a microstructure of a crystal, which is determined by the conformation of the polymer chains and arrangement thereof in the crystal.

Theoretical crystallinity: it is the highest theoretical degree of crystallization under the microcrystalline glass formulation system.

Average grain size: a microcrystalline glass sample is characterized by X-ray diffractometer, and the average grain size can be calculated from the XRD resultant data using Scherrer's equation $D=K\lambda/(\beta\cos\theta)$, wherein $\lambda$ is X-ray wavelength of 0.154056 nm, $\beta$ is full width at half maximum of the diffraction peak, K=0.89, and $\theta$ is the Bragg's diffraction angle. Exemplarily, a RAW file output from the XRD instrument is curve-fitted in Jade software, and a fitting report is output by Jade. Based on the angle $2\theta$ value and Peak FWHM value (full width at half maximum of the diffraction peak) corresponding to each diffraction peak in the fitting report, the Peak FWHM value is converted to the radian system: $\beta = $ (FWHM/180x3.14), and by means of the Scherrer's equation $D = K\lambda/(\beta\cos\theta)$, the grain size of each diffraction peak is calculated and then averaged to obtain the average grain size. The X-ray diffractometer used in the present application is Shimadzu XRD-6100, wherein the target material is copper, the diffraction angle range used for the test is $2\theta=10°$ to $80°$, the scanning speed is 0.2°/min, the operating voltage is 40 kV, and the operating current is 30 mA.

Crystal content: it is a percentage of a total mass of crystals to a total mass of the microcrystalline glass, which is also known as the actual crystallinity. It should be understood that both crystalline phase and grain refer to the crystals precipitated in the microcrystalline glass, and differ only in descriptions.

Transmittance: it is a ratio of a radiant energy projected onto and transmitted through an object to a total radiant energy projected onto an object when the incident light flux leaves from an illuminated surface or an incident side of a medium to the other side. In the Examples and Comparative Examples of the present application, the transmittance of the microcrystalline glass at 550 nm is defined as an average value of the transmittances measured at 550 nm for a plurality of glass samples from a same batch. At least 5 microcrystalline glass samples were taken from each batch for test.

Refractive index: it is a ratio of the propagation velocity of light in vacuum to that in a medium. The present application uses a monocular Abbe refractometer (WYA-2WAJ, Bell Analytical Instruments Co., Ltd.) with a wavelength set at 589 nm to determine the refractive index of the microcrystalline glass sheet.

b-value: it is the yellow-blue value of a material, wherein the b-value described in the Examples of the present application is the b-value of transmitted light, in which a positive b value indicates that the material is bluish, measured by spectrophotometric colorimeter CM-3600A from Konica Minolta, Japan.

Vickers hardness: it is a standard indicating the hardness of a material proposed by Robert L. Smith and George E. Sandland from Vickers Ltd, Britain in 1921.

Sample Thickness Test: it is determined by a micrometer. It should be understood that along the thickness direction, the degree of ion exchange gradually varies from surface to center, while the overall exchange capacity of Na-K and/or Li-Na generally does not exceed 1% of the total mass of the sample. Additionally, the differences in ionic radiuses are of the order of pm, and thus the swelling effect along the thickness direction is extremely slight and it can be approximately considered that the thickness is substantially unchanged. That is to say, before and after the chemical strengthening, the thickness change of the microcrystalline glass sheet is very small and negligible.

Optical performance test: referring to the standard "GB/T 7962.12-2010 Test Methods for Colorless Optical Glass, Part 12: Intra-spectral Transmittance Ratio", the haze, b-value and transmittance of the microcrystalline glass are determined by professional testing instruments. The present application uses the spectrophotometer CM-3600A from Konica Minolta, Japan to determine the haze and the b-value. The present application uses the UV-2000 UV-visible spectrophotometer from Shimadzu to determine the transmittance and its curve.

Method for determining crystal content: X-ray diffractometer is used to determine the microcrystalline glass samples to obtain the XRD test results, and then the X-ray diffractometer result file (in RAW format) is imported into the Rietveld Refinement software (such as Gsas, Fullprof, Maud) for fitting and calculating X-ray diffraction data. The ratio of the fitted crystalline phase peak area to the fitted total peak area is the crystal content. The X-ray diffractometer used in the present application is Shimadzu XRD-6100, wherein the target material is copper, the diffraction angle range used for the test is $2\theta=10°$ to $80°$, the scanning speed is $0.2°$/min, the operating voltage is 40 kV, and the operating current is 30 mA.

Density measurement: the density of the microcrystalline glass samples is measured according to the principle of "Archimedes Drainage Method", and the testing instrument is ALFA MIRAGE Electronic Density Balance SD-200L.

Young's modulus measurement: a UMS-100 ultrasonic material characterization system is used for the measurement.

Differential Scanning Calorimetry (DSC) test: The testing instrument is TGA / DSC3+ thermo gravimetric and simultaneous thermal analyzer from METTLER TOLEDO. For the test, the samples are ground and sieved through a 200-mesh sieve. The test conditions are: from room temperature to 1100°C and a heating rate of 10°C/min. The standard material used for the test is $\alpha$-$Al_2O_3$ powder. The instrument is placed in an ambient temperature of 24°C and an air humidity of 40%.

Single-rod static pressure: it is measured by placing a strengthened microcrystalline glass on a bottom ring of a tensile testing machine (LT-850A), staring a test software, setting a moving speed of the extrusion rod (a rod diameter of 8 mm, an indenter arc radius of 10 mm) to 50 mm/min, and starting the test by click. During the test, the extrusion rod applies force to the center of the microcrystalline glass sheet to be tested at the set moving speed until the microcrystalline glass is cracked and broken. The test software automatically reads the force (N) when the glass is broken as the test result. 10 microcrystalline glass samples in the same state are taken for testing, and the average value of the test results is taken as the single-rod static pressure of the microcrystalline glass.

Scratch test: the scratch test is carried out by fixing a pen with a Mohs hardness at an angle of 45° by means of an automatic pencil hardness tester, contacting the tip with a surface of the glass sample, and moving the glass placing table at a moving rate of 60 mm/min under a predetermined load. A wiped clean glass sample to be tested is placed on the glass placing table, and the predetermined load is set by placing weights of the appropriate weight. The present application uses gem mineral hardness pens Nos. 6 to 8 corresponding to Mohs hardness grades 6 to 8, respectively. After the scratch test is finished, the scratched glass sample is placed under a 400x microscope to observe the scratching condition and photographed for recording. The hardness of the tested glass sample is determined according to whether there are scratches and to the conditions of the scratches. If there are scratches, it means that the hardness of the tested glass sample is lower than that of the hardness pen used for the test. If there are no scratches, it means that the hardness of the tested glass sample is higher than that of the hardness pen used for the test.

Electron probe test: the instrument for test is Shimadzu electron probe EPMA-1720. The characteristic X-rays generated after the electron beam acts on the samples are utilized for micro-area composition analysis. In the present application, the depth of the compressive stress layer formed by potassium-sodium exchange in the strengthened microcrystalline glass obtained after chemical strengthening is obtained by the electron probe test.

Surface $K_2O$ concentration test: the surface $K_2O$ concentration is obtained by dividing the mass of $K_2O$ by the total mass of oxides, wherein the total mass of oxides comprises the contents of oxides that can be accurately determined by XRF such as $SiO_2$, $Al_2O_3$, $P_2O_5$, $ZrO_2$, $Na_2O$, $K_2O$, and the like, and does not comprise the content of oxides that cannot be accurately determined by XRF such as $Li_2O$, $B_2O_3$, and the like. The surface $K_2O$ concentration of the strengthened microcrystalline glass of the present application is determined by X-ray fluorescence spectrometry (XRF), and the equipment used for the test is Thermo Scientific *ARL™ PERFORMX.* The target is Rh (Rhodium), the phototube voltage is 40 kW, the current is 60 mA, the collimator is 0.15, LiF200 is selected as crystal, FPC is selected as detector, the assay range is a circle with a diameter of 29 mm, and the analysis software is UniQuant for performing a standard-less analysis. The XRF test is performed using a standard-less test, in which the mass of elements with an atomic number of 6 and below or oxides thereof in the glass are not tested. That is, the $K_2O$ concentration is obtained from the XRF test in the present application, and during calculation, the total mass of oxides does not comprise the mass of elements with the atomic number of 6 and below or oxides thereof in the glass.

Vickers hardness (HV) test: it is performed by making small sheets with a length, width and thickness of 50 mm*50 mm*0.7 mm from a strengthened microcrystalline glass sheet after chemical strengthening, selecting glass samples with a clean surface and without a damage visible to a naked eye such as scratches, pits, cracks, and the like as the test specimen, and using a Vickers hardness tester for Vickers hardness measurement. Test conditions include: a load of 300 gf, and a load time of 10 s. The validity of indentation is in accordance with GB/T 16534. Three different positions on the same specimen surface are selected for measurement. The average of three measurements is selected as the final test result. The Vickers hardness tester used in the present application is a digital small load Vickers hardness tester (Beijing Kewei Technology Co., Ltd, VTD405).

II. A strengthened microcrystalline glass with high scratch resistance and a microcrystalline glass to be chemically strengthened

In the present application, after a study on the components of the existing microcrystalline glasses, it's found that although zinc-magnesium spinel crystals have become the preferred crystalline phase for enhancing the scratch resistance of a glass due to the high Young's modulus and shear modulus of zinc-magnesium spinel crystals, the scratch resistance of the existing transparent spinel microcrystalline glass is insufficient to meet the requirements for use as a protective cover of a high-end product. Thus, the existing transparent spinel microcrystalline glass needs to be further improved.

The present application provides a strengthened microcrystalline glass with high scratch resistance comprising a compressive stress layer and a tensile stress layer, and the main crystalline phase of the strengthened microcrystalline glass is $(Zn, Mg)Al_2O_4$. The strengthened microcrystalline glass comprises $Na_2O$. The strengthened microcrystalline glass has a surface $K_2O$ concentration of $\geq 7.00$ wt%, preferably 7.00 wt% to 15.00 wt%. In the strengthened microcrystalline glass, along the thickness direction of the glass, the depth from any surface of the strengthened microcrystalline glass to a location close to that surface and having the same potassium (K) concentration as that at the center of the strengthened microcrystalline glass is $\geq 0.07t$, preferably 0.07t to 0.10t, wherein t is the thickness of the strengthened microcrystalline glass.

The present application carries out an in-depth study on the intrinsic strength of the microcrystalline glass and the stress characteristics of the glass that can be obtained after strengthening. Finally a strengthened microcrystalline glass with excellent scratch resistance is obtained by making a system-specific microcrystalline glass to be chemically strengthened with high intrinsic strength meet a specific stress characteristic after strengthening. In the present application, the high surface $K_2O$ concentration and deep potassium-sodium exchange depth of the strengthened microcrystalline glass confer excellent surface stress characteristics and deep stress characteristics to the strengthened microcrystalline glass, by which in combination with the original high intrinsic strength of the microcrystalline glass to be chemically strengthened, the mechanical properties of the strengthened microcrystalline glass of the present application is ultimately greatly improved, so that the strengthened microcrystalline glass achieves a scratch resistance effect comparable to that of a sapphire glass.

It should be understood that the composition at the surface of the microcrystalline glass after the chemical strengthening ion-exchange process may be different from the composition of a freshly formed microcrystalline glass (i.e., the microcrystalline glass to be chemically strengthened that has not undergone an ion-exchange). In other words, the composition of the compressive stress layer formed on the surface of the strengthened microcrystalline glass by ion exchange may be different from that of the microcrystalline glass to be chemically strengthened. This is because one type of alkali metal ion (e.g., $Li^+$ or $Na^+$) in the freshly formed microcrystalline glass is replaced by a larger alkali metal ion (e.g., $Na^+$ or $K^+$) during ion exchange. For example, $Na^+$ in the glass is exchanged with $K^+$ in the salt bath for strengthening and replaced by $K^+$, and/or $Li^+$ in the glass is exchanged with $Na^+$ in the salt bath for strengthening and replaced by $Na^+$. However, in an embodiment, the composition at or near the deep center of a glass article of the microcrystalline glass may still be the composition of a freshly formed microcrystalline glass. In other words, the composition of the tensile stress layer that has not undergone ion-exchange in the strengthened microcrystalline glass may still be the composition of the microcrystalline glass to be chemically strengthened. As a result, the potassium concentration in the center of the strengthened microcrystalline glass may still be the potassium concentration in the composition of the microcrystalline glass to be chemically strengthened.

Since the chemical strengthening process is the exchange of alkali metal ions, the microcrystalline glass to be chemically strengthened of the present application has a main crystalline phase of $(Zn, Mg)Al_2O_4$ and a secondary crystalline phase comprising one or more of tetragonal $ZrO_2$, $Zn_2SiO_4$, and $Mg_2SiO_4$, which does not contain alkali metals that participate in the exchange of ions. Thus, the composition of the crystalline phase before and after the strengthening is substantially unchanged. Therefore, the strengthened microcrystalline glass obtained after chemical strengthening may still have a main crystalline phase of $(Zn, Mg)Al_2O_4$ and a secondary crystalline phase comprising one or more of tetragonal $ZrO_2$, $Zn_2SiO_4$, and $Mg_2SiO_4$.

In some embodiments of the present application, the strengthened microcrystalline glass has a surface $K_2O$ concentration of $\geq 7.00$ wt%, preferably 7.00 wt% to 15.00 wt%. In some embodiments of the present application, the surface $K_2O$ concentration can be 7.00 wt% to 8.00 wt%, 7.00 wt% to 9.00 wt%, 7.00 wt% to 10.00 wt%, 7.00 wt% to 11.00 wt%, 7.00 wt% to 12.00 wt%, 7.00 wt% to 13.00 wt%, 7.00 wt% to 14.00 wt%, 7.00 wt% to 15.00 wt%, 8.00 wt% to 10.00 wt%, 9.00 wt% to 14.00 wt%, 9.00 wt% to 13.00 wt%, 7.00 wt%, 8.00 wt%, 9.00 wt%, 10.00 wt%, 11.00 wt%, 12.00 wt%, 13.00 wt%, 14.00 wt%, 15.00 wt%, and the like, and all ranges and subranges therein.

In the strengthened microcrystalline glass, along the thickness direction of the glass, the depth from any surface of the strengthened microcrystalline glass to a location close to that surface and having the same potassium (K) concentration as that at the center of the strengthened microcrystalline glass is $\geq 0.07t$, preferably 0.07t to 0.10t, wherein t is the thickness of the strengthened microcrystalline glass. In some embodiments, along the thickness direction of the glass, the depth from any surface of the strengthened microcrystalline glass to a location close to that surface and having the same potassium (K) concentration as that at the center of the strengthened microcrystalline glass can be 0.07t to 0.08t, 0.07t to 0.09t, 0.08t to 0.09t, 0.08t to 0.10t, 0.09t to 0.10t, 0.07t, 0.08t, 0.09t, 0.10t, and the like, and all ranges and subranges therein. Exemplarily, when the thickness of the strengthened microcrystalline glass is 0.7 mm, along the thickness direction of the glass, the depth from any surface of the strengthened microcrystalline glass to a location close to that surface and having the same potassium (K) concentration as that at the center of the strengthened microcrystalline glass can be $\geq 49.00$ $\mu$m, more preferably 49.00 $\mu$m to 70.00 $\mu$m, and can further be 49.00 $\mu$m to 55.00 $\mu$m, 49.00 $\mu$m to 60.00 $\mu$m, 49.00 $\mu$m to 55.00 $\mu$m, 50.00 $\mu$m to 60.00 $\mu$m, 50.00 $\mu$m to 70.00 $\mu$m, 60.00 $\mu$m to 70.00 $\mu$m, 55.00 $\mu$m to 70.00 $\mu$m, 65.00 $\mu$m to 70.00 $\mu$m, 49.00 $\mu$m, 50.00 $\mu$m, 55.00 $\mu$m, 60.00 $\mu$m, 65.00 $\mu$m, 70.00 $\mu$m, and the like, and all ranges and subranges therein. It should be understood that in an embodiment, any of the above ranges may be combined with any other range. In the present application, as the depth from any surface of the strengthened microcrystalline glass to a location close to that surface and having the same potassium (K) concentration as that at the center of the strengthened microcrystalline glass increases, the depth of the K ions in the salt bath entering into the microcrystalline glass increases during the chemical strengthening, and thereby the depth of the compressive stress layer formed by the exchange between potassium and sodium in the strengthened microcrystalline glass (i.e., the exchange of the potassium ions in the salt bath with the Na ions in the microcrystalline glass) increases.

In some embodiments of the present application, at a thickness of 0.7 mm, the strengthened microcrystalline glass has a single-rod static pressure more than or equal to 450 N, preferably 450 N to 650 N. In some embodiments of the present application, the single-rod static pressure of the strengthened microcrystalline glass can be 450 N to 500 N, 450 N to 600 N, 450 N to 490 N, 480 N to 570 N, 470 N to 610 N, 520 N to 650 N, 540 N to 630 N, 450 N, 500 N, 550 N, 600 N, 650 N, and the like, and all ranges and subranges therein. It should be understood that in an embodiment, any of the above ranges may be combined with any other range.

In some embodiments of the present application, the Young's modulus of the microcrystalline glass to be chemically strengthened is not less than 110.00 GPa, preferably 110.00 GPa to 140.00 GPa. It should be understood that in the present application, the Young's modulus of the microcrystalline glass moderately increases after the chemical strengthening treatment, so that the Young's modulus of the strengthened microcrystalline glass is not less than 110 GPa, preferably 110 GPa to 140 GPa. In some embodiments, the Young's modulus of the strengthened microcrystalline glass can be 110 GPa to 140 GPa, 110 GPa to 115 GPa, 110 GPa to 120 GPa, 110 GPa to 125 GPa, 115 GPa to 128 GPa, 121 GPa to 129 GPa, 114 GPa to 127 GPa, 113 GPa to 129 GPa, 126 GPa to 130 GPa, 110 GPa, 115 GPa, 118 GPa, 120 GPa, 123 GPa, 126 GPa, 130 GPa, 135 GPa, 140 GPa, and the like, and all ranges and subranges therein. It should be understood that in an embodiment, any of the above ranges may be combined with any other range.

In some embodiments of the present application, the Vickers hardness of the strengthened microcrystalline glass is not less than 750 kgf/mm$^2$, preferably 750 kgf/mm$^2$ to 900 kgf/mm$^2$, more preferably 800 kgf/mm$^2$ to 900 kgf/mm$^2$. In some embodiments, the Vickers hardness of the strengthened microcrystalline glass can be 750 kgf/mm$^2$ to 810 kgf/mm$^2$, 800 kgf/mm$^2$ to 820 kgf/mm$^2$, 810 kgf/mm$^2$ to 850 kgf/mm$^2$, 840 kgf/mm$^2$ to 880 kgf/mm$^2$, 860 kgf/mm$^2$ to 890 kgf/mm$^2$, 870 kgf/mm$^2$ to 900 kgf/mm$^2$, 850 kgf/mm$^2$ to 880 kgf/mm$^2$, 830 kgf/mm$^2$ to 845 kgf/mm$^2$, 860 kgf/mm$^2$ to 875 kgf/mm$^2$, 750 kgf/mm$^2$, 800 kgf/mm$^2$, 820 kgf/mm$^2$, 845 kgf/mm$^2$, 860 kgf/mm$^2$, 870 kgf/mm$^2$, 885 kgf/mm$^2$, 890 kgf/mm$^2$, and the like, and all ranges and subranges therein. It should be understood that in an embodiment, any of the above ranges may be combined with any other range.

In some embodiments of the present application, the microcrystalline glass to be chemically strengthened has an average grain size of ≤15.00 nm, preferably 1.00 nm to 10.00 nm, more preferably 4.50 nm to 8.00 nm. It should be understood that in the present application, the chemical strengthening process does not result in a significant change in grain size. Therefore, in the strengthened microcrystalline glass, the average grain size is ≤ 15.00 nm. In some embodiments, the average grain size can be 1.00 nm to 4.00 nm, 1.00 nm to 9.00 nm, 1.00 nm to 13.00 nm, 3.00 nm to 5.00 nm, 6.00 nm to 10.00 nm, 7.00 nm to 9.00 nm, 5.00 nm to 6.00 nm, 5.00 nm to 7.00 nm, 5.00 nm to 8.00 nm, 6.00 nm to 8.00 nm, 8.00 nm to 10.00 nm, 7.00 nm to 12.00 nm, 1.00 nm, 2.00 nm, 3.00 nm, 4.00 nm, 5.00 nm, 6.00 nm, 7.00 nm, 8.00 nm, 9.00 nm, 10.00 nm, 11.00 nm, 12 nm, 13.00 nm, 14.00 nm, 15.00 nm, and the like, preferably 1.00 nm to 10.00 nm, more preferably 4.50 nm to 8.00 nm, and all ranges and subranges therein. It should be understood that in an embodiment, any of the above ranges may be combined with any other range.

In some embodiments of the present application, the microcrystalline glass to be chemically strengthened has a crystal content of 20.00 wt% to 50.00 wt%, preferably 25.00 wt% to 50.00 wt%, more preferably 25.00 wt% to 45.00 wt%. It should be understood that since the microcrystalline glass to be chemically strengthened of the present application has a main crystalline phase of $(Zn, Mg)Al_2O_4$ and a secondary crystalline phase comprising one or more of tetragonal $ZrO_2$, $Zn_2SiO_4$, and $Mg_2SiO_4$, which does not contain alkali metal ions and thus does not participate in ion exchange. Therefore, the crystal content of the strengthened microcrystalline glass still remains 20.00 wt% to 50.00 wt%, preferably 25.00 wt% to 50.00 wt%, more preferably 25.00 wt% to 45.00 wt%. In some embodiments, the microcrystalline glass to be chemically strengthened can have a crystal content of 20.00 wt%, 25.00 wt%, 28.00 wt%, 30.00 wt%, 33.00 wt%, 35.00 wt%, 38.00 wt%, 40.00 wt%, 43.00 wt%, 45.00 wt%, 48.00 wt%, 50.00 wt, and the like, and all ranges and subranges therein. It should be understood that in an embodiment, any of the above ranges may be combined with any other range.

In some embodiments of the present application, at a thickness of 0.7 mm, for light at a wavelength of 550 nm, the transmittance of the microcrystalline glass to be chemically strengthened is more than or equal to 85.00%, preferably more than or equal to 89.00%. It should be understood that in the present application, the transmittance of the microcrystalline glass remains substantially unchanged after the chemical strengthening treatment. Therefore, the strengthened microcrystalline glas s is transparent in the visible range and still has substantially the same transmittance as the microcrystalline glass to be chemically strengthened.

In some embodiments, at a thickness of 0.7 mm, for light at a wavelength of 550 nm, the transmittance of the microcrystalline glass to be chemically strengthened can be 85.00% to 89.00%, 85.00% to 96.00%, 85.00% to 90.00%, 88.00% to 95.00%, 88.00% to 96.00%, 88.00% to 99.00%, 86.00%, 87.00%, 88.00%, 89.00%, 90.00%, 91.00%, 92.00%, 93.00%, 94.00%, 95.00%, 96.00%, and the like, and all ranges and subranges therein. It should be understood that in an embodiment, any of the above ranges may be combined with any other range.

In some embodiments of the present application, the surface of the strengthened microcrystalline glass is scratched by a gem mineral hardness pen with a Mohs hardness grade of 7 fixed at an angle of 45° on an automatic pencil hardness tester under a load of 750 g, and no scratch is observed on the surface of the strengthened microcrystalline glass when the scratched microcrystalline glass is observed under a 400x microscope.

It should be understood that the composition at the surface of the microcrystalline glass after the chemical strengthening ion-exchange process may be different from the composition of a freshly formed microcrystalline glass (i.e., the microcrystalline glass to be chemically strengthened that has not undergone ion-exchange). However, in an embodiment, the composition at or near the deep center of the glass article of the microcrystalline glass may still be the composition of a freshly formed microcrystalline glass. In other words, the tensile stress layer in the strengthened microcrystalline glass can still be the composition of the microcrystalline glass to be chemically strengthened.

In some embodiments of the present application, the tensile stress layer of the strengthened microcrystalline glass or the microcrystalline glass to be chemically strengthened comprises the following components in terms of mass percentage of oxide: $30.00\% \leq SiO_2 < 35.00\%$; 30.00% to 40.00% of $Al_2O_3$; 10.00% to 12.00% of ZnO; 2.00% to 4.00% of MgO; 5.00% to 7.00% of $ZrO_2$; 2.00% to 9.00% of $Na_2O$; 0% to 2.00% of $Li_2O$; and 0% to 8.00% of $B_2O_3$. Meanwhile, the components of the tensile stress layer of the strengthened microcrystalline glass or the microcrystalline glass to be chemically strengthened meet the following conditions:

$$(1)\ X= ((Na_2O+B_2O_3)/ZrO_2)/Al_2O_3,$$

$X \geq 2.00$;

$$(2)\ Y= \ln\left[(Na_2O+B_2O_3)/ZrO_2\right],$$

$Y \geq 0$;

$$(3)\ Z = (SiO_2 + Al_2O_3 - MgO - ZnO)/(Li_2O + Na_2O + B_2O_3),$$

$4.00 \leq Z \leq 10.00$;

in equations (1) to (3), the oxide represents the mass percentage of the oxide component.

Preferably, the components of the tensile stress layer of the strengthened microcrystalline glass or the microcrystalline glass to be chemically strengthened further meet the following condition:

$$(4)\ W = (0.8 \times (Al_2O_3 - SiO_2) + 1.5 \times (ZnO - MgO))/ZrO_2,$$

$0 \leq W \leq 3.00$; in equation (4), the oxide represents the mass percentage of the oxide component.

In some embodiments of the present application, in the tensile stress layer of the strengthened microcrystalline glass or the microcrystalline glass to be chemically strengthened, the mass percentage of $SiO_2$ is 32.00% to 34.95%; and/or the mass percentage of $Al_2O_3$ is 32.00% to 38.00%; and/or the mass percentage of ZnO is 10.00% to 11.48%; and/or the mass percentage of MgO is 2.50% to 3.50%; and/or the mass percentage of $ZrO_2$ is 5.40% to 6.50%; and/or the mass percentage of $Na_2O$ is 2.50% to 8.50%; and/or the mass percentage of $B_2O_3$ is 2.50% to 8.00%.

In some embodiments of the present application, the tensile stress layer of the strengthened microcrystalline glass or the microcrystalline glass to be chemically strengthened further comprises 0 wt% to 3.00 wt% of BaO and/or 0 wt% to 2.00 wt% of $Y_2O_3$.

In some embodiments of the present application, the strengthened microcrystalline glass or the microcrystalline glass to be chemically strengthened is substantially free of $TiO_2$ and $P_2O_5$.

The formulation for the microcrystalline glass to be chemically strengthened is optimized in the present application, in which the oxide types and the content of each oxide in the formulation system are adjusted. In a study of each oxide component of the microcrystalline glass to be chemically strengthened in the present application, it was found that there exists a certain correlation between each oxide component, and this correlation influences the structure and properties of the microcrystalline glass to be chemically strengthened, which relates to the scratch resistance of the microcrystalline glass required by the present application, and to other properties of the microcrystalline glass.

The inventors have found through study that: since alumina possesses a very high dissociation energy G=134 KJ•cm$^{-3}$, increasing the content of $Al_2O_3$ in the formulation system of spinel microcrystalline glass can, on the one hand, enhance the aluminum saturation of the crystalline phase and, on the other hand, help to increase the dissociation energy in the residual glass phase and improve the intrinsic strength of the residual glass phase. Additionally, since the atomic packing density of the glass increases with the coordination number of aluminum, increasing the content of $Al_2O_3$ is also favorable to improve the densification of the microcrystalline glass system. However, the use of alumina instead of silica may lead to increased difficulty in glass melting and molding, and thus there is a need for the addition of components with fluxing effects, such as alkali metal oxides, alkaline earth metal oxides, boron oxide, and the like. Alkali metal oxides can provide alkali metal ions to achieve chemical strengthening and toughening of microcrystalline glass while providing free oxygen which affects the network structure of the glass. Boron oxide has a better fluxing effect, but the coordination structure of boron oxide can be affected by the free oxygen provided by alkali metals and/or alkaline earth metals. If the content of boron oxide is excessive, it may cause a decrease in the ratio of boron-oxygen tetrahedra to boron-oxygen triangles in the glass phase, transforming part of the glass phase from the original three-dimensional spatial framework structure into a two-dimensional spatial layered structure, thereby weakening the network structure of the glass. Meanwhile, the excessive content of boron oxide may have a negative impact on the optical properties of the glass. Zinc oxide, magnesium oxide and alumina are the constituents of the target main crystalline phase (Zn, Mg)$Al_2O_4$, and $ZrO_2$ is the nucleating agent. The content relationship of these oxides determines not only the content of the main crystalline phase in the microcrystalline glass to be chemically strengthened, but also the structure and intrinsic strength of the residual glass phase in the microcrystalline glass to be chemically strengthened.

On this basis, the inventors surprisingly found that on the basis of the content range of each oxide, the adjustment of the microcrystalline glass formulation system has the following advantages. On the one hand, the difficulty of melting the base glass and the heat treatment temperature to prepare the target microcrystalline glass to be chemically strengthened using the base glass can be reduced. The glass formulation provided by the present application can be mass-produced by conventional continuous melting, calendering, and the like to obtain the base glass, ensuring the moldability of glass. Moreover, the base glass corresponding to the glass formulation of the present application can be used to obtain a transparent microcrystalline glass to be chemically strengthened with a main crystalline phase of zinc-magnesium spinel solid solution and good optical properties at a heat treatment temperature not exceeding 800°C. Compared with the prior art, the formulation system provided by the present application can significantly reduce the heat treatment temperature, reducing the difficulty of mass production of spinel microcrystalline glass and thus improving the mass-producibility of spinel microcrystalline glass. On the other hand, by utilizing the synergistic cooperation of each oxide component of a specific content, the intrinsic strength of the residual glass phase in the microcrystalline glass to be chemically strengthened is improved, while the desired content of the target main crystalline phase $(Zn, Mg)Al_2O_4$ is obtained. By combining the main crystalline phase $(Zn, Mg)Al_2O_4$ with high Young's modulus and shear modulus with the residual glass phase with high intrinsic strength, the resulting microcrystalline glass to be chemically strengthened has high intrinsic strength, and superior scratch resistance than those of the existing spinel-system microcrystalline glasses. The strengthened microcrystalline glass produced from the microcrystalline glass to be chemically strengthened of the present application by strengthening has a scratch resistance effect comparable to that of a sapphire glass, which can meet the needs for cover glasses of high-end electronic products.

$SiO_2$ is the oxide that forms the glass network and is an indispensable component of the glass network structure. Appropriately increasing the content of $SiO_2$ can increase the stability and mechanical strength of the glass. However, excess $SiO_2$ may increase the viscosity of the base glass, making it more difficult to melt the glass, thereby reducing the moldability of the base glass. In the present application, the mass percentage of $SiO_2$ is 30.00% to 35.00%, which is conducive to better balancing the contradiction among the stability enhancement, formability enhancement, and mechanical strength performance enhancement of the glass. In some embodiments, the content of $SiO_2$ may be 30.00% to 31.00%, 30.00% to 32.00%, 30.00% to 33.00%, 32.00% to 34.95%, 31.00% to 34.95%, 31.00% to 34.00%, 30.00%, 30.50%, 31.00%, 31.50%, 32.00%, 32.50%, 33.00%, 33.50%, 34.00%, 34.50%, 34.95%, and the like, and all ranges and subranges therein. It should be understood that in an embodiment, any of the above ranges may be combined with any other range.

$Al_2O_3$ is an intermediate oxide in glass formation, which can improve the chemical stability of the glass. $Al_2O_3$ is one of the components of zinc-magnesium spinel crystalline phase formed after crystallization of the base glass, which may directly affect the content of the main crystalline phase $(Zn, Mg)Al_2O_4$. Meanwhile, $[AlO_4]$ is larger than $[SiO_4]$ in volume, and thus can provide more space for ion exchange and promote chemical strengthening. Further, $Al_2O_3$ has extremely high dissociation energy, which strongly influences the intrinsic strength of the residual glass phase. However, excess $Al_2O_3$ may increase the viscosity of the base glass, decreasing the moldability of the base glass. In the present application, the mass percentage of $Al_2O_3$ is 30.00% to 40.00%. In some embodiments, the content of $Al_2O_3$ may be 30.00% to 31.00%, 30.00% to 32.00%, 30.00% to 33.00%, 32.00% to 35.00%, 31.00% to 35.00%, 31.00% to 34.00%, 33.00% to 36.00%, 32.00% to 38.00%, 30.00% to 35.00%, 34.00% to 39.00%, 35.00% to 40.00%, 36.00% to 40.00%, 30.00%, 31.00%, 32.00%, 33.00%, 34.00%, 35.00%, 37.00%, 38.00%, 39.00%, 40.00%, and the like, and all ranges and subranges therein. It should be understood that in an embodiment, any of the above ranges may be combined with any other range.

ZnO provides the zinc necessary for the formation of the zinc-magnesium spinel crystalline phase after crystallization of the base glass. ZnO can reduce the thermal expansion coefficient of the glass and improve the chemical stability, thermal stability, refractive index, and the like, of the glass. In the present application, the mass percentage of ZnO is 10% to 12%. In some embodiments, the content of ZnO may be 10.00% to 11.00%, 10.00% to 11.40%, 11.00% to 12.00%, 11.50% to 12.00%, 10.00%, 10.50%, 11.00%, 11.48%, 11.50%, 12.00%, and the like, and all ranges and subranges therein. It should be understood that in an embodiment, any of the above ranges may be combined with any other range.

MgO provides the magnesium necessary for the formation of the zinc-magnesium spinel crystalline phase after crystallization of the base glass. MgO can slow down the hardening speed of glass and improve the processability of glass. MgO can also reduce the crystallization tendency and crystallization speed, increase the high temperature viscosity of glass, and improve the chemical stability and mechanical strength of glass. In the present application, the mass percentage of MgO is 2% to 4%. In some embodiments, the content of MgO may be 2.00% to 3.00%, 3.00% to 4.00%, 2.00% to 2.50%, 2.50% to 3.00%, 2.50% to 4.00%, 3.50% to 4.00%, 2.00%, 2.50%, 3.00%, 3.50%, 4.00%, and the like, and all ranges and subranges therein. It should be understood that in an embodiment, any of the above ranges may be combined with any other range.

$ZrO_2$ has high cationic charge and strong field strength, which has a larger accumulation effect on the glass structure, and thus is used as nucleating agent in the base glass. Meanwhile, $ZrO_2$ can also increase the strength and toughness of the microcrystalline glass, and improve its acid and alkali corrosion resistance. In addition, $ZrO_2$ is also the second crystalline phase of the microcrystalline glass of the system herein. However, the melting of $ZrO_2$ is extremely difficult, and excess $ZrO_2$ cannot be uniformly dispersed in the base glass, which is extremely prone to produce melting defects, such as unmelted matter or precipitation. In the present application, the mass percentage of $ZrO_2$ is 5% to 7%. In some embodiments, the content of $ZrO_2$ may be 5.00% to 6.00%, 5.50% to 6.00%, 5.50% to 7.00%, 6.00% to 7.00%, 6.50% to 7.00%, 5.00%, 5.40%, 5.50%, 6.00%, 6.50%, 7.00%, and the like, and all ranges and subranges therein. It should be understood that in an embodiment, any of the above ranges may be combined with any other range.

The tensile stress layer of the strengthened microcrystalline glass of the present invention or the microcrystalline glass to be chemical strengthened of the present invention also contains one or more alkali metal oxides, e.g., $Li_2O$ and $Na_2O$, both of which can promote the ion exchange process to chemically strengthen the microcrystalline glass, and to improve the mechanical strength properties of the microcrystalline glass. Meanwhile, alkali metal oxides serve as network modifier oxides in the formation of the glass, which can provide free oxygen and destroy the network structure of the glass, and then affect the intrinsic strength of the glass. However, destroy of the network structure of glass is advantageous for reducing the high-temperature viscosity of the glass and promoting the melting and clarification of the glass liquid.

In order to balance the multiple effects and ensure that the microcrystalline glass meets the desired properties, in the present invention, the mass percentage of $Na_2O$ is between 2.00% and 9.00%. $Na^+$ is an ion-exchange component required for the chemical strengthening process, and by carrying out an exchange reaction between $K^+$ with a large ionic radius in the molten salt bath and $Na^+$ with a small ionic radius in the microcrystalline glass, a surface compressive stress can be generated on the surface of the microcrystalline glass, which can further improve the monolithic strength and scratch resistance level of the microcrystalline glass. In some embodiments, the content of $Na_2O$ may be 2.00% to 3.00%, 2.00% to 5.00%, 2.00% to 8.00%, 2.50% to 8.50%, 3.00% to 6.00%, 4.00% to 9.00%, 2.00% to 7.00%, 5.00% to 8.00%, 6.00% to 9.00%, 2.00%, 2.50%, 3.00%, 4.00%, 5.00%, 6.00%, 7.00%, 8.00%, 8.50%, 9.00%, and the like, and all ranges and subranges therein. It should be understood that in an embodiment, any of the above ranges may be combined with any other range.

In the present invention, the mass percentage of $Li_2O$ is between 0.00% and 2.00%. By carrying out an exchange reaction between $Na^+$ with a large ionic radius in the molten salt bath and $Li^+$ with a small ionic radius in the microcrystalline glass, a deep stress can be generated in the microcrystalline glass, which improves the impact resistance of the microcrystalline glass while increasing the monolithic strength of the microcrystalline glass and scratch resistance level. In some embodiments, the content of $Li_2O$ may be 0.00% to 1.00%, 0.00% to 1.50%, 1.00% to 1.50%, 1.00% to 2.00%, 1.50% to 2.00%, 0.00%, 1.00%, 1.50%, 2.00%, and the like, and all ranges and subranges therein. It should be understood that in an embodiment, any of the above ranges may be combined with any other ranges.

$B_2O_3$ is used as a fluxing agent in the glass formation process. The free oxygen provided by alkali metals or alkaline earth metals may affect the coordination of boron oxide, transforming it from boron-oxygen triangles to boron-oxygen tetrahedra made up of bridging oxygen, resulting in the transformation of part of the glass phase from the initial two-dimensional spatial layered structure into a three-dimensional spatial framework structure, such that the glass network structure is reinforced. $B_2O_3$ can reduce the high temperature viscosity of glass, accelerate the clarification of glass, reduce the crystallization ability of glass, and effectively alleviate the difficulty of melting base glass due to high alumina content. However, excessive $B_2O_3$ may reduce the chemical stability and the mechanical strength of glass, and affect the optical properties of glass. In the present invention, the mass percentage of $B_2O_3$ is between 0% and 8%. In some embodiments, the content of $B_2O_3$ may be 1.00% to 6.00%, 2.00% to 3.00%, 1.00% to 4.00%, 1.00% to 5.00%, 2.00% to 5.00%, 2.50% to 8.00%, 3.00% to 6.00%, 4.00% to 9.00%, 2.00% to 7.00%, 5.00% to 8.00%, 6.00% to 9.00%, 0.00%, 1.00%, 2.00%, 2.50%, 3.00%, 4.00%, 5.00%, 6.00%, 7.00%, 8.00%, and the like, and all ranges and subranges therein. It should be understood that in an embodiment, any of the above ranges may be combined with any other ranges.

In some embodiments, the value of $X=((Na_2O+B_2O_3)/ZrO_2)/Al_2O_3$ may be 2.00 to 3.00, 2.00 to 4.00, 2.00 to 5.00, 2.00 to 6.00, 2.00 to 7.00, 2.00 to 8.00, 2.00 to 9.00, 2.00 to 10.00, 3.00 to 4.00, 3.00 to 6.00, 3.00 to 9.00, 5.00 to 9.00, 6.00 to 9.00, 8.00 to 9.00, 2.00, 3.00, 4.00, 5.00, 6.00, 7.00, 8.00, 9.00, 10.00, and the like, and all ranges and subranges therein. It should be understood that in an embodiment, any of the above ranges may be combined with any other ranges.

In some embodiments, the value of $Y=\ln[(Na_2O+B_2O_3)/ZrO_2]$ may be 0.00 to 0.10, 0.00 to 1.00, 0.00 to 0.30, 0.00 to 0.60, 0.00 to 0.90, 0.00 to 0.40, 0.10 to 0.90, 0.30 to 0.70, 0.30 to 0.90, 0.20 to 0.50, 0.40 to 0.80, 0.10, 0.20, 0.30, 0.40, 0.50, 0.60, 0.70, 0.80, 0.90, 1.00, 1.10, and the like, and all ranges and subranges therein. It should be understood that in an embodiment, any of the above ranges may be combined with any other ranges.

In some embodiments, the value of $Z=(SiO_2+Al_2O_3-MgO-ZnO)/(Li_2O+Na_2O+B_2O_3)$ may be 4.00 to 10.00, 4.00 to 5.00, 4.00 to 6.00, 4.00 to 7.00, 4.00 to 8.00, 4.00 to 9.00, 5.00 to 6.00, 5.00 to 7.00, 5.00 to 8.00, 5.00 to 9.00, 5.00 to 10.00, 6.00 to 7.00, 6.00 to 8.00, 6.00 to 9.00, 6.00 to 10.00, 7.00 to 8.00, 7.00 to 9.00, 7.00 to 10.00, 8.00 to 9.00, 8.00 to 10.00, 9.00 to 10.00, 4.00, 5.00, 6.00, 7.00, 8.00, 9.00, 10.00, and the like, and all ranges and subranges therein. It should be understood that in an embodiment, any of the above ranges may be combined with any other ranges.

In some embodiments of the present invention, the content of each oxide in the tensile stress layer of strengthened microcrystalline glass or the microcrystalline glass to be chemical strengthened further meets the following condition:

$$(4) \quad W=(0.8\times(Al_2O_3-SiO_2)+1.5\times(ZnO-MgO))/ZrO_2,$$

$0\leq W\leq 3.00$; in equation (4), the oxides represent the mass percentages of the oxide components. On the basis of meeting the content range of each oxide as well as the requirements of equations (1) to (3), adjusting the content relationship between $Al_2O_3$, $SiO_2$, $ZnO$, $MgO$, and $ZrO_2$ to meet (4) can ensure the transparent microcrystalline glass has excellent optical properties.

In some embodiments, the value of $W=(0.8\times(Al_2O_3-SiO_2)+1.5\times(ZnO-MgO))/ZrO_2$ may be 0.00 to 3.00, 0.00 to 1.00, 0.00 to 2.00, 1.00 to 2.00, 1.00 to 3.00, 2.00 to 3.00, 0.00 to 0.50, 0.00 to 1.50, 0.00 to 2.50, 1.00 to 1.50, 1.00 to 2.50,

2.00 to 2.50, 2.50 to 3.00, 0.00, 0.50, 1.00, 1.50, 2.00, 2.50, 3.00, and the like, and all ranges and subranges therein. It should be understood that in an embodiment, any of the above ranges may be combined with any other ranges.

In some embodiments of the present invention, the strengthened microcrystalline glass is obtained by subjecting the microcrystalline glass to be chemical strengthened to a chemical strengthening treatment.

In some embodiments of the present invention, in the microcrystalline glass to be chemical strengthened, in terms of the molar percentage of the oxide, the molar percentage of $Al_2O_3$ is more than the sum of the molar percentages of MgO and ZnO; the theoretical crystallinity of the microcrystalline glass to be chemical strengthened is at least 30.00 wt%, preferably 30.00 wt% to 50.00 wt%; and when the microcrystalline glass to be chemical strengthened meets the theoretical crystallinity, the dissociation energy U per unit volume of the residual glass phase in the microcrystalline glass to be chemical strengthened is not less than 71.00 $KJ \cdot cm^{-3}$, preferably 71.00 $KJ \cdot cm^{-3}$ to 134.00 $KJ \cdot cm^{-3}$.

In some embodiments, the microcrystalline glass to be chemical strengthened can have a theoretical crystallinity of 30.00 wt% to 40.00 wt%, 30.00 wt% to 60.00 wt%, 30.00 wt% to 70.00 wt%, 35.00 wt% to 45.00 wt%, 32.00 wt% to 48.00 wt%, 41.00 wt% to 49.00 wt%, 30.00 wt%, 35.00 wt%, 40.00 wt%, 45.00 wt%, 50.00 wt%, and the like, and all ranges and subranges therein. It should be understood that in an embodiment, any of the above ranges may be combined with any other ranges.

It should be understood that the theoretical crystallinity is the theoretical highest degree of crystallization of a particular formulation of base glass in the formation of a specific crystalline phase. Theoretical crystallinity is the theoretical highest degree of crystallization, which is the preliminary basic regulation of the core crystalline phase components to ensure that a microcrystalline glass with the desired content of the target crystalline phase may be eventually obtained.

For different systems of microcrystalline glass, the calculation of the theoretical crystallinity varies due to the different crystalline phases and degrees of crystallization. The theoretical crystallinity in different microcrystalline glass systems is determined by both the nucleating agents in the components, such as $ZrO_2$, and the like, and the oxides that make up the specific crystalline phase. In the present invention, the microcrystalline glass to be chemical strengthened has a main crystalline phase of zinc-magnesium spinel solid solution $(Zn, Mg)Al_2O_4$ and a secondary crystalline phase comprising one or more of tetragonal $ZrO_2$, $Zn_2SiO_4$, and $Mg_2SiO_4$. Therefore, the theoretical crystallinity of the microcrystalline glass of the present invention is determined by both the nucleating agents in the components, such as $ZrO_2$, and the like, and the oxides $Al_2O_3$, MgO and ZnO that make up the crystalline phase.

The main crystalline phase of the microcrystalline glass to be chemical strengthened of the present invention is zinc-magnesium spinel solid solution $(Zn, Mg)Al_2O_4$, wherein when the crystalline phase composition is expressed in oxides molar ratios, $MgO/Al_2O_3$ equals 1 in $MgAl_2O_4$ and $ZnO/Al_2O_3$ equals 1 in $ZnAl_2O_4$. In order to obtain higher crystallinity and better strengthening effect, it is required that after the complete formation of $ZnAl_2O_4$ and/or $MgAl_2O_4$, a part of $Al_2O_3$ can still remain in the residual glass phase. Since $[AlO_4]$ tetrahedra have a larger volume than $[SiO_4]$ tetrahedra, the remaining moderate amount of $Al_2O_3$ in the residual glass phase can provide a larger space for the ion exchange in the chemical strengthening treatment, promoting the ion exchange. On this basis, in the microcrystalline glass to be chemical strengthened of the present invention, the molar percentage of $Al_2O_3$ is greater than the sum of the molar percentages of ZnO and MgO.

In some embodiments of the present invention, when the theoretical crystallinity of the microcrystalline glass to be chemical strengthened is met, the dissociation energy U per unit volume of the residual glass phase in the microcrystalline glass to be chemical strengthened is not less than 71.00 $kJ \cdot cm^{-3}$, preferably 71.00 $kJ \cdot cm^{-3}$ to 134.00 $kJ \cdot cm^{-3}$. In some embodiments, the dissociation energy U per unit volume of the residual glass phase in the microcrystalline glass to be chemical strengthened may be 71.00 $kJ \cdot cm^{-3}$ to 75.00 $kJ \cdot cm^{-3}$, 71.00 $kJ \cdot cm^{-3}$ to 80.00 $kJ \cdot cm^{-3}$, 71.00 $kJ \cdot cm^{-3}$ to 90.00 $kJ \cdot cm^{-3}$, 71.00 $kJ \cdot cm^{-3}$ to 100.00 $kJ \cdot cm^{-3}$, 71.00 $kJ \cdot cm^{-3}$ to 110.00 $kJ \cdot cm^{-3}$, 71.00 $kJ \cdot cm^{-3}$ to 120.00 $kJ \cdot cm^{-3}$, 71.00 $kJ \cdot cm^{-3}$ to 130.00 $kJ \cdot cm^{-3}$, 80.00 $kJ \cdot cm^{-3}$ to 90.00 $kJ \cdot cm^{-3}$, 80.00 $kJ \cdot cm^{-3}$ to 100.00 $kJ \cdot cm^{-3}$, 80.00 $kJ \cdot cm^{-3}$ to 110.00 $kJ \cdot cm^{-3}$, 80.00 $kJ \cdot cm^{-3}$ to 120.00 $kJ \cdot cm^{-3}$, 80.00 $kJ \cdot cm^{-3}$ to 130.00 $kJ \cdot cm^{-3}$, 90.00 $kJ \cdot cm^{-3}$ to 100.00 $kJ \cdot cm^{-3}$, 90.00 $kJ \cdot cm^{-3}$ to 110.00 $kJ \cdot cm^{-3}$, 90.00 $kJ \cdot cm^{-3}$ to 120.00 $kJ \cdot cm^{-3}$, 90.00 $kJ \cdot cm^{-3}$ to 130.00 $kJ \cdot cm^{-3}$, 100.00 $kJ \cdot cm^{-3}$ to 110.00 $kJ \cdot cm^{-3}$, 100.00 $kJ \cdot cm^{-3}$ to 120.00 $kJ \cdot cm^{-3}$, 100.00 $kJ \cdot cm^{-3}$ to 130.00 $kJ \cdot cm^{-3}$, 71.00 $kJ \cdot cm^{-3}$, 80.00 $kJ \cdot cm^{-3}$, 90.00 $kJ \cdot cm^{-3}$, 100.00 $kJ \cdot cm^{-3}$, 110.00 $kJ \cdot cm^{-3}$, 120.00 $kJ \cdot cm^{-3}$, 134.00 $kJ \cdot cm^{-3}$, and the like, and all ranges and subranges therein. It should be understood that in an embodiment, any of the above ranges may be combined with any other ranges.

Regarding the calculation of the dissociation energy U per unit volume of the residual glass phase, a microcrystalline glass of spinel system of the present invention is taken as an example.

It is assumed that in the glass formulation: the molar percentage of $Al_2O_3$ is a, the molar percentage of ZnO is b, and the molar percentage of MgO is c, then a > b + c. The dissociation energy U per unit volume of the residual glass phase after a zinc-magnesium spinel microcrystalline glass with theoretical crystallinity is prepared from the base glass of this formulation can be calculated as follows.

1. Determination of molar percentages of ZnO, MgO, and $Al_2O_3$ in the residual glass phase.

Theoretical crystallinity is the crystallinity achieved when both ZnO and MgO are involved in spinel precipitation, and thus both ZnO and MgO will be present in the crystalline phase. That is, the contents of both ZnO and MgO in the residual glass phase are 0. Since a>b+c, $Al_2O_3$ in an amount of a-(b+c) will remain in the residual glass phase. According to the content of oxides in the residual glass phase, the molar percentage of $Al_2O_3$ in the residual glass phase can be obtained by conversion.

2. Determination of molar percentages of oxides other than $Al_2O_3$, ZnO and MgO in the residual glass phase.

(1) Nucleating agent generally precipitates prior to crystals. For example, nucleating agent $ZrO_2$ precipitates tiny grains with a size < 1 nm in the nucleation step of microcrystalline glass, on which the crystal grows up. Nucleating agent $TiO_2$ forms titanate nucleus in the nucleation step of microcrystalline glass, and the crystal grows up under its induction, and then encapsulates it. Nucleating agent is generally in the center of the crystal, and therefore, theoretically, the nucleating agent will entirely exist in the crystalline phase, and the content of the nucleating agent in residual glass phase is 0.

(2) Except for the oxides that make up the crystalline phase and the nucleating agent, all other oxides in the base glass are theoretically present in the residual glass phase. According to the content of oxides in the residual glass phase, the molar percentages in the residual glass phase are obtained through conversion.

3. In the residual glass phase, the molar percentage of an oxide "i" is defined as $n_i$, and the dissociation energy coefficient of the oxide is defined as $U_i$. The value of $U_i$ can be obtained according to Makishima and Mackenzie, as shown in Table 1 below.

The dissociation energy per unit volume of the residual glass phase is defined as U:

$$U=\sum U_i \times n_i,$$

wherein $U_i$ is the dissociation energy coefficient in $kJ \cdot cm^{-3}$ and $n_i$ is the molar percentage of a certain oxide "i" in the residual glass phase.

Table 1. $U_i$ values for common oxides

| Oxides | $U_i/kJ \cdot cm^{-3}$ | Oxides | $U_i/kJ \cdot cm^{-3}$ |
|---|---|---|---|
| $SiO_2$ | 64.50 | CaO | 64.90 |
| $Al_2O_3$ | 134.00 | BaO | 40.60 |
| $B_2O_3$ | 77.80 | $Li_2O$ | 80.40 |
| $P_2O_5$ | 62.80 | $Na_2O$ | 37.30 |
| $As_2O_3$ | 54.80 | $K_2O$ | 23.40 |
| $Y_2O_3$ | 74.30 | $TiO_2$ | 86.70 |
| MgO | 83.70 | $ZrO_2$ | 97.10 |
| ZnO | 41.50 | / | / |
| Note: "/" indicates non-existence. | | | |

In some embodiments of the present invention, the tensile stress layer of the strengthened microcrystalline glass or the microcrystalline glass to be chemical strengthened above further comprises 0 wt% to 3.00 wt% of BaO and/or 0 wt% to 2.00 wt% of $Y_2O_3$.

$Y_2O_3$ is a high field strength cation, acts synergistically with $Al_2O_3$, and is conducive to the enhancement of the atomic stacking density of glass and to improve the hardness and Young's modulus of microcrystalline glass. In the present invention, the mass percentage of $Y_2O_3$ is between 0.00% and 2.00%. In some embodiments, the content of $Y_2O_3$ may be 0.00% to 1.00%, 0.00% to 1.50%, 1.00% to 1.50%, 1.00% to 2.00%, 1.50% to 2.00%, 0.00%, 1.00%, 1.50%, 2.00%, and the like, and all ranges and subranges therein. It should be understood that in an embodiment, any of the above ranges may be combined with any other ranges.

BaO has good fluxing effect, and in particular the effect is extremely significantly in the system here. Meanwhile, BaO can increase the refractive index of glass phase and improve the optical properties of glass. In the present invention, the mass percentage of BaO is between 0% and 3.00%. In some embodiments, the content of BaO may be 0.00% to 3.00%, 0.00% to 1.00%, 0.00% to 2.00%, 1.00% to 2.00%, 1.00% to 3.00%, 2.00% to 3.00%, 0.00% to 0.50%, 0.00% to 1.50%, 0.00% to 2.50%, 1.00% to 1.50%, 1.00% to 2.50%, 2.00% to 2.50%, 2.50% to 3.00%, 0.00%, 0.50%, 1.00%, 1.50%, 2.00%, 2.50%, 3.00%, and the like, and all ranges and subranges therein. It should be understood that in an embodiment, any of the above ranges may be combined with any other ranges.

In some embodiments of the present invention, the strengthened microcrystalline glass or the microcrystalline glass to be chemical strengthened is substantially free of $TiO_2$ and/or $P_2O_5$. "Substantially free of" herein means that $TiO_2$ and/or $P_2O_5$ are not intentionally added or formulated into the glass, but may be present in very small amounts as contaminants. The inventors found that the addition of $TiO_2$ to the formulation system of the present invention may result in undesired colors. In order to obtain the desired transparent microcrystalline glass, $TiO_2$ is preferably not included.

In the present invention, the microcrystalline glass to be chemical strengthened can be prepared by the following method:

step 1: obtaining a base glass comprising the following components in terms of mass percentage of the oxides: $30.00\% \leq SiO_2 < 35.00\%$; 30.00% to 40.00% of $Al_2O_3$; 10.00% to 12.00% of ZnO; 2.00% to 4.00% of MgO; 5.00% to 7.00% of $ZrO_2$; 2.00% to 9.00% of $Na_2O$; 0% to 2.00% of $Li_2O$; and 0% to 8.00% of $B_2O_3$; and the content of each oxide in the base glass meets the following conditions:

$$(1) \ X = ((Na_2O+B_2O_3)/ZrO_2)/Al_2O_3,$$

$X \geq 2.00$;

$$(2) \ Y = \ln\,[(Na_2O+B_2O_3)/ZrO_2],$$

$Y \geq 0$;

$$(3) \ Z = (SiO_2+Al_2O_3-MgO-ZnO)/(Li_2O+Na_2O+B_2O_3),$$

$4.00 \leq Z \leq 10.00$; in equations (1) to (3), the oxides represent the mass percentage of the oxide components;

step 2: subjecting the base glass to a heat treatment to obtain the microcrystalline glass to be chemical strengthened, wherein the heat treatment comprises a nucleation treatment and/or a crystallization treatment. It should be understood that the heat treatment of the base glass can be performed in one step or in two or more steps. If a one-step heat treatment is performed, the nucleation treatment is not carried out separately, and the nucleation and the growth of target crystal are performed directly in a one-step heating process, which can be understood as a direct crystallization treatment. If a two-step heat treatment is performed, a two-step heating process is performed, in which firstly a nucleation treatment is performed, and secondly a target crystal growth, i.e., crystallization treatment, is performed.

It should be understood that the base glass has the composition of the microcrystalline glass to be chemical strengthened, in terms of mass percentages of oxides.

Preferably, in step 2, when the nucleation treatment is preformed, the nucleation temperature is 650°C to 850°C, preferably 650°C to 750°C, and the nucleation treatment duration is 0 h to 72 h, preferably 0 h to 24 h.

Preferably, in step 2, when the crystallization treatment is preformed, the crystallization temperature is 700°C to 1000°C, preferably 700°C to 850°C, and the crystallization treatment duration is 0.1 h to 72 h, preferably 0.1 h to 24 h.

Preferably, in step 2, when the heat treatment is preformed, the heating rate is 5°C/min to 30°C/min, preferably 5°C/min to 15°C/min.

Preferably, the content of each oxide in the base glass also meets the following condition:

$$(4) \ W = (0.8 \times (Al_2O_3-SiO_2)+1.5 \times (ZnO-MgO))/ZrO_2,$$

$0 \leq W \leq 3.00$; in equation (4), the oxides represent the mass percentages of the oxide components.

Preferably, the base glass further comprises 0 wt% to 3.00 wt% of BaO and/or 0 wt% to 2.00 wt% of $Y_2O_3$.

Preferably, the base glass is substantially free of $TiO_2$ and/or $P_2O_5$.

In the present invention, the base glass is molded in a manner including, but not limited to, float, overflow, calendering or casting processes. Exemplarily, the base glass can be obtained by mixing each component according to the formula, melt molding, and then cooling and annealing. For example, the raw material of the base glass can be melted at a melting temperature of 1480°C to 1650°C to obtain molten glass liquid, which is subsequently subjected to molding, cooling and annealing to obtain the base glass, wherein preferably the annealing temperature is 500°C to 650°C, and the holding during annealing is 12 h to 48 h.

In the present invention, during the preparation of the base glass, a clarifying agent can be added to the raw material of the base glass. The clarifying agent includes, but is not limited to, one or more of NaCl, $Na_2SO_4$, $SnO_2$, $As_2O_3$, $Sb_2O_3$, $NaNO_3$, $KNO_3$, $CeO_2$, and $(NH_4)_2SO_4$, preferably one or more of NaCl, $SnO_2$, $NaNO_3$, and $CeO_2$. Based on the total mass of raw materials of the base glass, the clarifying agent added in a content of 0.01 wt% to 2.00 wt%, preferably 0.01 wt% to 1.50 wt%.

In some embodiments of the present invention, the strengthened microcrystalline glass can be obtained by subjecting the microcrystalline glass to be chemical strengthened to a chemical strengthening treatment in a salt bath containing potassium salt at 380°C to 550°C for 1 h to 96 h, preferably 1 h to 48 h. The potassium salt comprises one or more of potassium nitrate, potassium sulphate, and potassium carbonate, preferably is potassium nitrate.

In some embodiments, the salt bath containing potassium salts may be composed of 100 wt% potassium salt, preferably 100 wt% potassium nitrate, or may be composed of a mixture of potassium and sodium salts, preferably a mixture of potassium nitrate and sodium nitrate. The salt bath may also contain 0 wt% to 1 wt% lithium salt, preferably 0 wt% to 1 wt% lithium nitrate. During the chemical strengthening treatment, a one-step chemical strengthening may be performed, or a two-step or multi-step chemical strengthening may be performed.

In some embodiments, the duration of the chemical strengthening treatment may be 1.00 h to 5.00 h, 1.00 h to 6.00 h, 3.00 h to 10.00 h, 5.00 h to 10.00 h, 7.00 h to 12.00 h, 9.00 h to 24.00 h, 12.00 h to 36.00 h, 24.00 h to 44.00 h, 8.00 h to 24.00 h, 9.00 h to 44.00 h, 25.00 h to 36.00 h, 22.00 h to 37.00 h, 48.00 h to 96.00 h, 6.00 h, 8.00 h, 12.00 h, 14.00 h, 24.00 h, 32.00 h, 36.00 h, 22.00 h, 18.00 h, 28.00 h, 42.00 h, 48.00 h, 60 h, 65 h, 70 h, 80 h, 90 h, 96 h, and the like, and all ranges and subranges therein.

In some embodiments, the temperature of the salt bath during the chemical strengthening treatment may be 380°C to 400°C, 400°C to 450°C, 450°C to 500°C, 500°C to 550°C, 400°C to 420°C, 450°C, 480°C, 500°C, 510°C, 530°C, 540°C, 550°C, and the like, and all ranges and subranges therein.

III. The present invention also provides a glass device made from the above strengthened microcrystalline glass or from the above microcrystalline glass to be chemical strengthened.

The glass device of the present invention may be regular-shaped or non-regular shaped. It can be fabricated by those skilled in the art as required.

IV. The present invention also provides an electronic device comprising the above strengthened microcrystalline glass or the above microcrystalline glass to be chemical strengthened.

The electronic device of the present invention includes, but is not limited to, at least one of a cell phone, a display (e.g., an in-vehicle display, an airborne display, etc.), a tablet computer, an electronic watch, a smart wear (e.g., a smart bracelet, a smart watch, smart eyeglasses), and a television.

In the electronic device of the present invention, a layer may or may not be provided on the surface of a covering part thereof.

Exemplarily, the electronic device of the present invention comprises:

a housing comprising a front surface, a back surface and a side surface;
an electronic assembly at least partially disposed within the housing, the electronic assembly comprising at least a controller, a memory and a display, the display being disposed on or adjacent to the front surface of the housing; and a covering substrate arranged above the display;
wherein at least a portion of at least one of the housing or the covering substrate comprises a microcrystalline glass to be chemical strengthened or a strengthened microcrystalline glass as aforementioned.

The microcrystalline glass to be chemical strengthened and the strengthened microcrystalline glass of the present invention have excellent properties and can be included/applied in other articles, as well as in any article requiring a certain degree of transparency, scratch resistance or other combinations of properties.

V. Examples

Example S1

(1) Preparation of base glass.

A total mass of 1000 g of raw materials were taken according to formula, which was mixed for 30 min until being mixed evenly. Then 5 g of a clarifying agent NaCl was added. The resulting mixture was placed in a platinum crucible and was melt at 1650°C for 5 hours, which was then poured into a mold for molding and was cooled down to 900°C. The resultant was placed into an annealing furnace at 620°C and was annealed for 12 hours, and was then cooled down to room temperature in the furnace to obtain the base glass.

(2) Preparation of microcrystalline glass (i.e., microcrystalline glass to be chemical strengthened).

The base glass was heat treated, which was heated to a nucleation temperature of 690°C at a heating rate of 10°C/min and subjected to a nucleation treatment for a nucleation treatment duration of 240 min. Then it was heated to a crystallization temperature of 760°C at a heating rate of 10°C/min, and was subjected to a crystallization treatment for a crystallization treatment duration of 240 min, such that a microcrystalline glass brick was obtained. The nucleation treatment duration herein refers to the holding time after the crystallization furnace was heated up to the set nucleation temperature at a set heating rate; and the crystallization treatment duration herein refers to the holding time after the crystallization furnace was heated up to the set crystallization temperature at a set heating rate.

(3) Cold working treatment. The above microcrystalline glass brick was subjected to a cold working treatment comprising shaping and slicing, such that a microcrystalline glass sheet with a desired size, such as a microcrystalline glass sheet with a length, width, and thickness of 50 mm × 50 mm × 0.7 mm, was obtained.

After the slicing treatment, CNC treatment, grinding treatment, and polishing treatment were performed sequentially, or at least one of CNC treatment, grinding treatment, and polishing treatment were performed after the slicing treatment to modify the glass sheet.

A microcrystalline glass sample (i.e., a microcrystalline glass sheet to be chemical strengthened) used in Example S1 for the test of physical property parameters of the microcrystalline glass and to be chemical strengthened is a polished sheet with a length, width, and thickness of 50 mm × 50 mm × 0.7 mm.

(4) Preparation of strengthened microcrystalline glass. The above microcrystalline glass sheet to be chemical strengthened was put into 100 wt% $KNO_3$ at 480°C for one-step chemical strengthening ion exchange for 6 h (i.e., 360 min) to obtain the strengthened microcrystalline glass.

Examples S2 to S10

Examples S2 to S10 were prepared similar to Example S1, except that the component contents and relevant parameters were adjusted as shown in Tables 2 and 4.

Comparative Examples D1 to D7

Examples D1 to D7 were prepared similar to Example S1, except that the component contents and relevant parameters were adjusted as shown in Tables 3 and 5.

Tables 2 to 7 show the formulations of Examples and Comparative Examples, the characteristic parameters of the microcrystalline glass to be chemical strengthened and the strengthened microcrystalline glass of Examples and Comparative Examples, the anti-scratch experimental schemes, and the scratch experiment results of the microcrystalline glass to be chemical strengthened and the strengthened microcrystalline glass of Examples and Comparative Examples, respectively.

Table 2. Formulations for Examples S1 to S10

| Composition (wt. %) | S1 | S2 | S3 | S4 | S5 | S6 | S7 | S8 | S9 | S10 |
|---|---|---|---|---|---|---|---|---|---|---|
| $SiO_2$ | 33.07% | 33.85% | 33.75% | 34.32% | 32.55% | 34.90% | 34.70% | 34.92% | 34.74% | 34.86% |
| $Al_2O_3$ | 36.12% | 36.97% | 32.78% | 33.33% | 35.52% | 34.26% | 34.84% | 33.91% | 36.30% | 33.84% |
| $ZrO_2$ | 5.50% | 5.70% | 5.42% | 6.11% | 5.44% | 5.74% | 5.85% | 5.61% | 5.90% | 5.59% |
| MgO | 3.10% | 3.10% | 3.00% | 3.04% | 2.97% | 3.08% | 3.10% | 3.06% | 3.40% | 3.05% |
| ZnO | 10.52% | 10.80% | 10.20% | 10.40% | 10.33% | 10.67% | 11.80% | 10.60% | 11.00% | 10.58% |
| $Na_2O$ | 5.90% | 6.08% | 5.80% | 5.90% | 5.85% | 6.05% | 6.15% | 2.82% | 6.03% | 8.20% |
| $Li_2O$ | 0.00% | 0.00% | 0.00% | 0.00% | 0.00% | 0.00% | 0.00% | 1.54% | 0.00% | 0.38% |
| $B_2O_3$ | 3.49% | 3.50% | 6.79% | 6.90% | 3.42% | 5.30% | 3.56% | 3.52% | 0.00% | 3.50% |
| BaO | 2.30% | 0.00% | 2.26% | 0.00% | 2.25% | 0.00% | 0.00% | 2.32% | 2.63% | 0.00% |

(continued)

| Composition (wt. %) | S1 | S2 | S3 | S4 | S5 | S6 | S7 | S8 | S9 | S10 |
|---|---|---|---|---|---|---|---|---|---|---|
| $Y_2O_3$ | 0.00% | 0.00% | 0.00% | 0.00% | 1.67% | 0.00% | 0.00% | 1.70% | 0.00% | 0.00% |
| X | 4.73 | 4.55 | 7.09 | 6.29 | 4.80 | 5.77 | 4.76 | 3.33 | 2.82 | 6.18 |
| Y | 0.53 | 0.52 | 0.84 | 0.74 | 0.53 | 0.68 | 0.51 | 0.12 | 0.02 | 0.74 |
| Z | 5.92 | 5.94 | 4.24 | 4.24 | 5.91 | 4.88 | 5.63 | 7.00 | 9.39 | 4.56 |
| W | 2.47 | 2.46 | 1.85 | 1.68 | 2.47 | 1.89 | 2.25 | 1.87 | 2.14 | 1.88 |

Table 3. Formulations for Comparative Examples D1 to D7

| Composition (wt. %) | D1 | D2 | D3 | D4 | D5 | D6 | D7 |
|---|---|---|---|---|---|---|---|
| $SiO_2$ | 36.07% | 58.55% | 45.25% | 43.26% | 39.02% | 59.16% | 71.90% |
| $Al_2O_3$ | 34.73% | 20.63% | 27.84% | 28.99% | 34.53% | 21.77% | 7.44% |
| $ZrO_2$ | 8.13% | 2.91% | 5.90% | 6.05% | 6.09% | 0.00% | 3.96% |
| $P_2O_5$ | 0.00% | 0.00% | 0.00% | 0.00% | 0.00% | 0.00% | 2.57% |
| MgO | 3.58% | 2.73% | 3.29% | 3.20% | 3.30% | 1.74% | 0.00% |
| ZnO | 13.15% | 10.34% | 11.80% | 11.20% | 11.60% | 0.00% | 0.00% |
| $Na_2O$ | 4.34% | 0.00% | 0.80% | 4.90% | 0.08% | 17.33% | 1.10% |
| $Li_2O$ | 0.00% | 0.00% | 0.42% | 0.00% | 2.90% | 0.00% | 11.15% |
| $B_2O_3$ | 0.00% | 0.00% | 0.00% | 0.00% | 0.00% | 0.00% | 1.88% |
| BaO | 0.00% | 0.00% | 0.00% | 2.40% | 0.00% | 0.00% | 0.00% |
| $Y_2O_3$ | 0.00% | 0.00% | 0.00% | 0.00% | 0.00% | 0.00% | 0.00% |
| $TiO_2$ | 0.00% | 4.84% | 4.70% | 0.00% | 2.48% | 0.00% | 0.00% |
| X | 1.54 | 0 | 0.49 | 2.79 | 0.04 | / | / |
| Y | -0.63 | / | -2 | -0.21 | -4.33 | / | -0.28 |
| Z | 12.46 | / | 47.54 | 11.81 | 19.68 | / | 5.62 |
| W | 1.63 | -6.5 | -0.2 | 0.1 | 1.45 | / | / |
| Note: "/" indicates non-existence. | | | | | | | |

Table 4. The characteristic parameters of microcrystalline glass to be chemical strengthened and strengthened microcrystalline glass of Examples S1 to S10

| Parameters | S1 | S2 | S3 | S4 | S5 | S6 | S7 | S8 | S9 | S10 |
|---|---|---|---|---|---|---|---|---|---|---|
| Thickness of the microcrystalline glass to be chemical strengthened / mm | 0.70 | 0.70 | 0.70 | 0.70 | 0.70 | 0.70 | 0.70 | 0.70 | 0.70 | 0.70 |
| Theoretical crystallinity / wt% | 40.14 | 40.97 | 38.99 | 40.27 | 39.19 | 40.65 | 43.37 | 34.27 | 42.68 | 40.20 |
| Dissociation energy of residual glass phase /kJ·cm$^{-3}$ | 73.83 | 74.48 | 72.22 | 72.74 | 73.95 | 72.75 | 71.94 | 74.47 | 72.26 | 71.20 |
| Nucleation temperature (°C) / duration (min) | 690/240 | 720/240 | 690/240 | 720/240 | 690/240 | 700/240 | 700/240 | 670/240 | 685/240 | 675/240 |
| Crystallization temperature (°C) / duration (min) | 760/240 | 760/240 | 740/240 | 800/240 | 760/240 | 800/240 | 800/240 | 750/240 | 790/240 | 760/240 |
| Heating rate of heat treatment / °C/min | 10 | 10 | 10 | 10 | 10 | 10 | 10 | 10 | 10 | 10 |
| Crystalline content/wt% | 39.2 | 40.5 | 37.1 | 39.9 | 39.1 | 40.2 | 40.8 | 33.6 | 41.8 | 40.0 |
| Crystalline phase | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ | (Zn, Mg) $Al_2O_4$, tetragonal $ZrO_2$ |
| Average grain size /nm | 5.90 | 6.80 | 7.20 | 5.00 | 6.80 | 7.10 | 7.40 | 7.20 | 6.60 | 6.90 |
| Density / (g/cm$^3$) | 3.06 | 3.00 | 2.94 | 3.03 | 3.03 | 2.92 | 2.95 | 3.04 | 2.99 | 2.91 |
| b value | 0.67 | 0.73 | 0.83 | 0.54 | 1.15 | 1.07 | 0.73 | 0.70 | 0.38 | 0.66 |
| Transmittance at 550nm /% | 89.36 | 89.59 | 89.83 | 89.70 | 89.41 | 89.50 | 89.76 | 89.52 | 89.93 | 89.56 |
| Refractive | 1.618 | 1.610 | 1.593 | 1.600 | 1.615 | 1.612 | 1.610 | 1.618 | 1.605 | 1.605 |
| Young's Modulus /(GPa) | 114 | 123 | 119 | 121 | 121 | 119 | 117 | 122 | 112 | 113 |

(continued)

| Following are strengthening process and performance characteristics of strengthened microcrystalline glass after strengthening | | | | | | | | | | |
|---|---|---|---|---|---|---|---|---|---|---|
| Formulation of salt bath | 100wt% $KNO_3$ | 100wt% $KNO_3$ | 100wt% $KNO_3$ | 100wt% $KNO_3$ | 100wt% $KNO_3$ | 100wt% $KNO_3$ | 100wt% $KNO_3$ | 100wt% $KNO_3$ | 100wt% $KNO_3$ | 100wt% $KNO_3$ |
| Salt bath temperature /°C | 480 | 480 | 480 | 480 | 480 | 480 | 480 | 480 | 480 | 480 |
| Salt bath duration/min | 360.00 | 360.00 | 360.00 | 360.00 | 360.00 | 360.00 | 360.00 | 360.00 | 360.00 | 360.00 |
| Single-rod static pressure /N | 535 | 561 | 529 | 537 | 568 | 522 | 540 | 579 | 551 | 527 |
| Vickers Hardness /kgf/mm$^2$ | 854.00 | 842.00 | 826.00 | 840.00 | 851.00 | 841.00 | 838.00 | 852.00 | 822.00 | 850.00 |
| $DOL_K/\mu m$ | 53 | 51 | 54 | 55 | 58 | 61 | 52 | 65 | 56 | 59 |
| Surface $K_2O$ concentration /wt% | 8.76 | 9.32 | 8.71 | 9.11 | 9.25 | 9.54 | 8.76 | 10.02 | 8.75 | 8.93 |

Note. In the table: 1. $DOL_K$ refers to the depth, along the thickness direction of the glass, from any surface of the strengthened microcrystalline glass to a location close to that surface and having the same potassium (K) concentration as that at the center of the strengthened microcrystalline glass; 2. the temperature was raised to the nucleation temperature at the heating rate of the heat treatment, and after nucleation treatment for a certain duration, the temperature was then raised to the crystallization temperature at the same heating rate, and the crystallization treatment was performed for a certain duration.

Table 5. The characteristic parameters of microcrystalline glass to be chemical strengthened and strengthened microcrystalline glass of Comparative Examples D1 to D7

| Parameters | D1 | D2 | D3 | D4 | D5 | D6 | D7 |
|---|---|---|---|---|---|---|---|
| Theoretical crystallinity /wt% | 50.39 | 40.68 | 48.79 | 42.57 | 46.25 | 0 | / |
| Dissociation energy of residual glass phase /kJ·cm$^{-3}$ | 70.24 | 65.04 | 68.25 | 66.94 | 75.46 | 69.8 | / |
| Nucleation temperature (°C) / duration (min) | 800/120 | / | 800/240 | 800/120 | 800/120 | / | 540/240 |
| Crystallization temperature (°C) / duration (min) | 1000/240 | 1000/240 | 950/240 | 900/240 | 925/240 | / | 600/240 640/240 |
| Heating rate of heat treatment / °C/min | 10 | 10 | 10 | 10 | 10 | / | 10 |
| Crystalline content/wt% | 49.5 | 38.5 | 47.2 | 38.1 | 45.7 | / | 87.5 |
| Crystalline phase | ZnAl$_2$O$_4$, tetragonal ZrO$_2$ | ZnAl$_2$O$_4$, tetragonal ZrO$_2$ | ZnAl$_2$O$_4$, tetragonal ZrO$_2$ | ZnAl$_2$O$_4$, tetragonal ZrO$_2$ | ZnAl$_2$O$_4$, tetragonal ZrO$_2$, quartz solid solution | / | Petalite, lithium disilicate |
| Average grain size /nm | 7.3 | 7.9 | 6.8 | 6.7 | (Devitrification) | / | 20 |
| Density / (g/cm$^3$) | 3.16 | 2.98 | 2.84 | 3.04 | | 2.39 | 2.47 |
| b value | 0.9 | 2.14 | 2.3 | 1.7 | | / | 0.69 |
| Transmittance at 550nm /% | 89.21 | 87.65 | 87.42 | 89.2 | | 91 | 90.62 |
| Refractive | 1.61 | 1.61 | 1.61 | 1.61 | | 1.51 | 1.54 |
| Young's Modulus /(GPa) | / | 105.6 | 100.8 | 112 | | 70 | 98 |

(continued)

| Following are strengthening process and performance characteristics of strengthened microcrystalline glass after strengthening | | | | | | | |
|---|---|---|---|---|---|---|---|
| Formulation of salt bath | 100wt% $KNO_3$ | 100wt% $KNO_3$ | 100wt% $KNO_3$ | 100wt% $KNO_3$ | / | 100wt% $KNO_3$ | 100wt% $NaNO_3$ for 1st strengthening + 100wt% $KNO_3$ for 2nd strengthening |
| Salt bath temperature /°C | 480 | 480 | 480 | 480 | | 480 | 450 for 1st strengthening + 380 for 2nd strengthening |
| Salt bath duration/min | 360 | 360 | 360 | 360 | | 330 | 480 for 1st strengthening + 30 for 2nd strengthening |
| Single-rod static pressure /N | 428 | 377 | 360 | 299 | | 189 | 261 |
| Vickers Hardness /kgf/mm$^2$ | / | / | / | / | | 653 | 695 |
| $DOL_K$/μm | 51 | 36 | 25 | 29 | | 43 | 30 |
| Surface $K_2O$ concentration /wt% | 3.53 | 3.19 | 2.86 | 2.97 | | 6.54 | 1.96 |

Note. In the table: 1. $DOL_K$ refers to the depth, along the thickness direction of the glass, from any surface of the strengthened microcrystalline glass to a location close to that surface and having the same potassium (K) concentration as that at the center of the strengthened microcrystalline glass; 2. the temperature was raised to the nucleation temperature at the heating rate of the heat treatment, and after nucleation treatment for a certain duration, the temperature was raised to the crystallization temperature at the same heating rate, and the crystallization treatment was performed for a certain duration; 3. "/" indicates non-existing or not measured.

Table 6. Anti-scratch experimental schemes

| Scratch schemes | R1 | R2 | R3 | R4 | R5 |
|---|---|---|---|---|---|
| Detailed description | Gem mineral hardness pen No.7 (Mohs hardness grade 7) under a load of 250 g | Gem mineral hardness pen No.7 (Mohs hardness grade 7) under a load of 500 g | Gem mineral hardness pen No.6 (Mohs hardness grade 6) under a load of 750 g | Gem mineral hardness pen No.7 (Mohs hardness grade 7) under a load of 750 g | Gem mineral hardness pen No.8 (Mohs hardness grade 8) under a load of 750 g |
| Observation | Observe scratches under a high power microscope at 400X and determine the presence of scratches visible to the naked eye | | | | |

Table 7. Scratch experiment results of microcrystalline glass to be chemical strengthened and strengthened microcrystalline glass of Examples S1 to S10 and Comparative Examples D1 to D7

| Category | Pre-strengthening | | | | | Post-strengthening | | | | |
|---|---|---|---|---|---|---|---|---|---|---|
| Samples No. / Scratch scheme | R1 | R2 | R3 | R4 | R5 | R1 | R2 | R3 | R4 | R5 |
| S1 | NO | NO | NO | YES | YES | NO | NO | NO | NO | YES |
| S2 | NO | NO | NO | NO | YES | NO | NO | NO | NO | YES |

(continued)

| Category | Pre-strengthening | | | | | Post-strengthening | | | | |
|---|---|---|---|---|---|---|---|---|---|---|
| Samples No. / Scratch scheme | R1 | R2 | R3 | R4 | R5 | R1 | R2 | R3 | R4 | R5 |
| S3 | NO | NO | NO | YES | YES | NO | NO | NO | NO | YES |
| S4 | NO | NO | NO | YES | YES | NO | NO | NO | NO | YES |
| S5 | NO | NO | NO | YES | YES | NO | NO | NO | NO | YES |
| S6 | NO | NO | NO | YES | YES | NO | NO | NO | NO | YES |
| S7 | NO | NO | NO | YES | YES | NO | NO | NO | NO | YES |
| S8 | NO | NO | NO | NO | YES | NO | NO | NO | NO | YES |
| S9 | NO | NO | NO | YES | YES | NO | NO | NO | NO | YES |
| S10 | NO | NO | NO | YES | YES | NO | NO | NO | NO | YES |
| D1 | NO | YES | YES | YES | YES | NO | YES | NO | YES | YES |
| D2 | YES | YES | YES | YES | YES | NO | YES | YES | YES | YES |
| D3 | NO | YES | YES | YES | YES | NO | YES | YES | YES | YES |
| D4 | YES | YES | YES | YES | YES | NO | YES | YES | YES | YES |
| D6 | YES | YES | YES | YES | YES | NO | YES | YES | YES | YES |
| D7 | YES | YES | YES | YES | YES | NO | YES | YES | YES | YES |
| Sapphire glass | NO | NO | NO | NO | YES | / | | | | |

Note: unless stated otherwise, in the categories, "pre-strengthening" corresponds to microcrystalline glass sheets to be chemical strengthened and "post-strengthening" corresponds to strengthened microcrystalline glass sheets. For D6, "pre-strengthening" corresponds to base glass sheet and "post-strengthening" corresponds to strengthened glass sheet. "/" indicates non-existence.

As can be seen from the above results, the present invention strictly controls the content of each oxide in Examples S1 to S10 and regulates the content of oxides by X, Y, and Z, so that the microcrystalline glass to be chemical strengthened obtained has a high residual glass phase dissociation energy, and spinel crystals are formed in this microcrystalline glass to be chemical strengthened as expected in the present invention while excellent optical properties are maintained. By combining the main crystalline phase $(Zn, Mg)Al_2O_4$ with high Young's modulus and shear modulus with the residual glass phase with high intrinsic strength, the resulting microcrystalline glass to be chemical strengthened possesses high intrinsic strength, and achieves a scratch resistance superior to those of the existing spinel-system microcrystalline glass. Further, the microcrystalline glass to be chemical strengthened is strengthened to meet a specific stress characteristic, such that it is conferred with excellent surface stress characteristics and deep stress characteristics, and ultimately the strengthened microcrystalline glass of the present invention achieves greatly improved mechanical properties, enabling the strengthened microcrystalline glass to achieve a scratch resistance effect comparable to that of sapphire glass.

The microcrystalline glass to be chemical strengthened in Example S1 of the present invention can pass the scratching test with gem mineral hardness pen No. 7 (Mohs hardness grade 7) under a load of 250 g and 500 g, and with gem mineral hardness pen No. 6 (Mohs hardness grade 6) under a load of 750 g. The surface of the microcrystalline glass is free of scratches after scratching, and the result of scratching is shown in FIG. 4.

The microcrystalline glass to be chemical strengthened in Examples S2 and S8 of the present invention can pass the scratching test with gem mineral hardness pen No. 7 (Mohs hardness grade 7) under a load of 750 g. The surfaces of the microcrystalline glass are free of scratches after scratching, and the results of scratching are shown in FIG. 5.

As can be seen from Table 7 and Figs 4 and 5, the microcrystalline glass to be chemical strengthened of the present invention all has a good scratch resistance effect.

The strengthened microcrystalline glass in Example S1 of the present invention can pass the scratching test with gem mineral hardness pen No. 7 (Mohs hardness grade 7) under a load of 750 g. The surface of the microcrystalline glass is free of scratches after scratching, and the result of scratching is shown in FIG. 6.

The strengthened microcrystalline glass in Examples S2 and S8 of the present invention can pass the scratching test with gem mineral hardness pen No. 8 (Mohs hardness grade 8) under a load of 750 g. The scratch results on the surface of the microcrystalline glass after scratching are similar to that of the sapphire glass tested under the same conditions, and the results after scratching are shown in FIG. 7. This shows that the anti-scratch effects of the strengthened microcrystalline glass of Examples S2 and S8 of the present invention are comparable to that of sapphire glass.

As can be seen from Table 7 and Figs 6 and 7, the anti-scratch effects of the strengthened microcrystalline glass produced after the strengthening treatment using the microcrystalline glass to be chemical strengthened of the present invention are further improved compared to the microcrystalline glass to be chemical strengthened. The strengthened microcrystalline glass of the present invention can have a scratch resistance effect that is comparable to that of sapphire glass, meeting the needs of cover glass of high-end electronic products.

Comparative Examples D1 to D7 do not fully satisfy the requirements of the glass formulations of the present invention, and the stress characteristics after strengthening thereof also fails to satisfy the requirements of the present invention. The finally obtained microcrystalline glass to be chemical strengthened and strengthened microcrystalline glass are different from those of present invention, and the scratch resistance is obviously inferior to that of the Examples of the present invention.

The strengthened microcrystalline glass in Comparative Examples D1 and D2 fail to pass the scratching test with gem mineral hardness pen No. 7 (Mohs hardness grade 7) under a load of 750 g. The surfaces of the microcrystalline glass have significant scratches after scratching, and the results of scratching are shown in FIG. 8. In terms of comparison between the strengthened microcrystalline glass of D1 and D2, the scratch resistance of the strengthened microcrystalline glass of D1 is superior to that of D2.

The dissociation energy per unit volume of the residual glass phase in Comparative Example D5 is relatively high, which is 75.46 kJ·$cm^{-3}$, but the increase of dissociation energy thereof is benefit from a large amount of Li contained in the system. The present invention has found through experiments that this technical solution is unable to obtain a transparent microcrystalline glass sample to be chemical strengthened by heat treatment.

Comparative Example D6 is a mainstream microcrystalline glass product in the existing cover glass market. The microcrystalline glass to be chemical strengthened in Comparative Example D6 fail to pass the scratching test with gem mineral hardness pen No. 6 (Mohs hardness grade 6) under a load of 750 g. The surface of the microcrystalline glass has significant scratches after scratching, which are deep and wide, and accompanied by fish scale spot pattern or scarp chipping, and the result after scratching is shown in FIG. 9. The strengthened microcrystalline glass in Comparative Example D6 also fails to pass the scratching test with gem mineral hardness pen No. 6 (Mohs hardness grade 6) under a load of 750 g. The surface has significant scratches after scratching, and the result of scratching is shown in FIG. 10.

As can be seen from Table 7 and Figs 8 to 10, the scratch resistances of the microcrystalline glass to be chemical strengthened and strengthened microcrystalline glass in Comparative Examples D1 to D7 are significantly inferior to those of the microcrystalline glass to be chemical strengthened and strengthened microcrystalline glass of the present invention.

In addition, the heat treatment temperatures of all Examples of the present invention are lower than those of Comparative Examples D1 to D5, indicating that a transparent microcrystalline glass to be chemical strengthened, which has zinc-magnesium spinel solid solution as the main crystalline phase and good optical properties, can be obtained at a heat treatment temperature of not more than 800°C from the base glass obtained by the formulation of the present invention. In comparison with the prior art, the component system of the microcrystalline glass to be chemical strengthened provided by the present invention can significantly reduce the heat treatment temperature, thereby reducing the difficulty of mass production of spinel microcrystalline glass and improving the mass-producibility of spinel microcrystalline glass. That is, the formulations of the microcrystalline glass to be chemical strengthened of the present invention have a high feasibility of mass production. Meanwhile, the formulations of the present invention contains lower lithium, indicating the raw material cost is much lower than that of the mainstream lithium-aluminum-silica microcrystalline glass in the market, thus having a better application prospect.

Finally, it should be noted that the above embodiments are only used to illustrate the technical solutions of the present invention rather than limiting the technical solutions, and those skilled in the art should understand that any modifications and equivalent replacements made within the spirit and principles of the present application shall be included in the scope of claims of the present invention.

**Claims**

1. A strengthened microcrystalline glass having a high scratch resistance comprising a compressive stress layer and a tensile stress layer, wherein the strengthened microcrystalline glass has a main crystalline phase of $(Zn, Mg)Al_2O_4$; the strengthened microcrystalline glass comprises $Na_2O$; the strengthened microcrystalline glass has a surface $K_2O$ concentration of $\geq 7.00$ wt%, preferably 7.00 wt% to 15.00 wt%; and

along the thickness direction of the strengthened microcrystalline glass, the glass has a depth of $\geq 0.07t$, preferably $0.07t$ to $0.10t$, which is from any surface of the strengthened microcrystalline glass to a location close to that surface and having the same potassium (K) concentration as that at the center of the strengthened microcrystalline glass, wherein t is the thickness of the strengthened microcrystalline glass.

2. The strengthened microcrystalline glass of claim 1, wherein, at a thickness of 0.7 mm, the strengthened microcrystalline glass has a single-rod static pressure of more than or equal to 450 N, preferably 450 N to 650 N.

3. The strengthened microcrystalline glass of claim 1 or 2, wherein the strengthened microcrystalline glass has a Young's modulus not less than 110 GPa, preferably 110 GPa to 140 GPa.

4. The strengthened microcrystalline glass of any one of claims 1 to 3, wherein the strengthened microcrystalline glass has a Vickers hardness not less than 750 kgf/mm$^2$, preferably 750 kgf/mm$^2$ to 900 kgf/mm$^2$, more preferably 800 kgf/mm$^2$ to 900 kgf/mm$^2$.

5. The strengthened microcrystalline glass of any one of claims 1 to 4, wherein, the strengthened microcrystalline glass has an average grain size of $\leq$15.00 nm, preferably 1.00 nm to 10.00 nm, more preferably 4.50 nm to 8.00 nm; and/or, the strengthened microcrystalline glass has a crystal content of 20.00 wt% to 50.00 wt%, preferably 25.00 wt% to 50.00 wt%, more preferably 25.00 wt% to 45.00 wt%.

6. The strengthened microcrystalline glass of any one of claims 1 to 5, wherein the strengthened microcrystalline glass has a secondary crystalline phase comprising one or more of tetragonal $ZrO_2$, $Zn_2SiO_4$, and $Mg_2SiO_4$.

7. The strengthened microcrystalline glass of any one of claims 1 to 6, wherein the strengthened microcrystalline glass is transparent in the range of a visible light.

8. The strengthened microcrystalline glass of any one of claims 1 to 7, wherein the strengthened microcrystalline glass has no scratch on its surface if the surface of the strengthened microcrystalline glass is scratched with a gem mineral hardness pen having a Mohs hardness grade of 7, fixed on an automatic pencil hardness tester at an angle of 45°, under a load of 750 g, and the scratched surface of the microcrystalline glass is observed under a 400x microscope.

9. The strengthened microcrystalline glass of any one of claims 1 to 8, wherein the tensile stress layer of the strengthened microcrystalline glass comprises the following components in terms of mass percentage of oxide: 30.00%$\leq$SiO$_2$<35.00%, 30.00% to 40.00% of $Al_2O_3$, 10.00% to 12.00% of ZnO, 2.00% to 4.00% of MgO, 5.00% to 7.00% of $ZrO_2$, 2.00% to 9.00% of $Na_2O$, 0 to 2.00% of $Li_2O$, and 0 to 8.00% of $B_2O_3$; at the same time, the components of the tensile stress layer of the strengthened microcrystalline glass meet the following conditions:

$$(1)\ X = ((Na_2O+B_2O_3)/ZrO_2)/Al_2O_3,$$

wherein X$\geq$2.00;

$$(2)\ Y = \ln[(Na_2O+B_2O_3)/ZrO_2],$$

wherein Y$\geq$0; and

$$(3)\ Z = (SiO_2+Al_2O_3-MgO-ZnO)/(Li_2O+Na_2O+B_2O_3),$$

wherein 4.00$\leq$Z$\leq$10.00, and
in equations (1) to (3), the oxides represent the mass percentages of the oxide components.

10. The strengthened microcrystalline glass of any one of claims 1 to 9, wherein the components of the tensile stress layer of the strengthened microcrystalline glass further meet the following condition:

$$(4)\ W=(0.8\times(Al_2O_3-SiO_2)+1.5\times(ZnO-MgO))/ZrO_2,$$

wherein 0$\leq$W$\leq$3.00, and in equation (4), the oxides represent the mass percentages of the oxide components.

11. The strengthened microcrystalline glass of any one of claims 1 to 10, wherein, in the tensile stress layer of the strengthened microcrystalline glass, the mass percentage of SiO$_2$ is 32.00% to 34.95%; and/or the mass percentage

of $Al_2O_3$ is 32.00% to 38.00%; and/or the mass percentage of ZnO is 10.00% to 11.48%; and/or the mass percentage of MgO is 2.50% to 3.50%; and/or the mass percentage of $ZrO_2$ is 5.40% to 6.50%; and/or the mass percentage of $Na_2O$ is 2.50% to 8.50%; and/or the mass percentage of $B_2O_3$ is 2.50% to 8.00%.

12. The strengthened microcrystalline glass of any one of claims 1 to 11, wherein the tensile stress layer of the strengthened microcrystalline glass further comprises 0 wt% to 3.00 wt% of BaO and/or 0 wt% to 2.00 wt% of $Y_2O_3$.

13. The strengthened microcrystalline glass of any one of claims 1 to 12, wherein the strengthened microcrystalline glass is substantially free of $TiO_2$ and $P_2O_5$.

14. The strengthened microcrystalline glass of any one of claims 1 to 13, wherein the strengthened microcrystalline glass is obtained by subjecting a microcrystalline glass to be chemically strengthened to a chemical strengthening treatment comprising: placing the microcrystalline glass to be chemically strengthened in a salt bath containing a potassium salt at 380°C to 550°C for 1 h to 96 h, preferably 1 h to 48 h, wherein the potassium salt comprises one or more of potassium nitrate, potassium sulphate, and potassium carbonate, preferably potassium nitrate.

15. A microcrystalline glass to be chemically strengthened for the preparation of the strengthened microcrystalline glass of any one of claims 1 to 12, wherein the microcrystalline glass to be chemically strengthened has a main crystalline phase of $(Zn, Mg)Al_2O_4$; in the microcrystalline glass to be chemically strengthened, the molar percentage of $Al_2O_3$ is more than the sum of the molar percentages of MgO and ZnO in terms of the molar percentage of the oxide; the microcrystalline glass to be chemically strengthened has a theoretical crystallinity of at least 30.00 wt%, preferably 30.00 wt% to 50.00 wt%; and if the microcrystalline glass to be chemically strengthened meets the theoretical crystallinity, the microcrystalline glass to be chemically strengthened has a dissociation energy U per unit volume of a residual glass phase not less than 71.00 kJ·cm$^{-3}$, preferably 71.00 kJ·cm$^{-3}$ to 134.00 kJ·cm$^{-3}$.

16. The microcrystalline glass to be chemically strengthened of claim 15, wherein the microcrystalline glass to be chemically strengthened comprises the following components in terms of mass percentage of oxide: 30.00%≤$SiO_2$<35.00%; 30.00% to 40.00% of $Al_2O_3$; 10.00% to 12.00% of ZnO; 2.00% to 4.00% of MgO; 5.00% to 7.00% of $ZrO_2$; 2.00% to 9.00% of $Na_2O$; 0 to 2.00% of $Li_2O$; and 0 to 8.00% of $B_2O_3$; at the same time, the components of the microcrystalline glass to be chemically strengthened meet the following conditions:

$$(1)\ X = ((Na_2O+B_2O_3)/ZrO_2)/Al_2O_3,$$

wherein X≥2.00;

$$(2)\ Y = \ln[(Na_2O+B_2O_3)/ZrO_2],$$

wherein Y≥0; and

$$(3)\ Z = (SiO_2+Al_2O_3-MgO-ZnO)/(Li_2O+Na_2O+B_2O_3),$$

wherein 4.00≤Z≤10.00; and
in equations (1) to (3), the oxides represent the mass percentages of the oxide components.

17. The microcrystalline glass to be chemically strengthened of claim 15 or 16, wherein the components of the microcrystalline glass to be chemically strengthened further meet the following condition:

$$(4)\ W=(0.8\times(Al_2O_3-SiO_2)+1.5\times(ZnO-MgO))/ZrO_2,$$

wherein 0≤W≤3.00; and in equation (4), the oxides represent the mass percentages of the oxide components; and/or,

the microcrystalline glass to be chemically strengthened has a Young's modulus of not less than 110 GPa, preferably 110 GPa to 140 GPa; and/or,
the microcrystalline glass to be chemically strengthened has an average grain size of ≤15.00 nm, preferably 1.00 nm to 10.00 nm, more preferably 4.50 nm to 8.00 nm; and/or,
the microcrystalline glass to be chemically strengthened has a crystal content is 20.00 wt% to 50.00 wt%, preferably 25.00 wt% to 50.00 wt%, more preferably 25.00 wt% to 45.00 wt%; and/or,
the microcrystalline glass to be chemically strengthened has a secondary crystalline phase comprising one or more of tetragonal $ZrO_2$, $Zn_2SiO_4$, and $Mg_2SiO_4$; and/or,
the microcrystalline glass to be chemically strengthened further comprises 0 to 3.00 wt% of BaO and/or 0 to 2.00 wt% of $Y_2O_3$; and/or,
the microcrystalline glass to be chemically strengthened is substantially free of $TiO_2$ and $P_2O_5$.

18. A glass device made from the strengthened microcrystalline glass of any of claims 1 to 14 or from the microcrystalline glass to be chemically strengthened of any of claims 15 to 17.

19. An electronic device comprising the strengthened microcrystalline glass of any of claims 1 to 14 or the microcrystalline glass to be chemically strengthened of any of claims 15 to 17.

**Figure 1**

**Figure 2**

**Figure 3**

(a)                    (b)                    (c)

**Figure 4**

(d)                              (e)

**Figure 5**

**Figure 6**

(g)        (h)        (i)

**Figure 7**

(j)        (k)

**Figure 8**

(l)        (m)

**Figure 9**

**Figure 10**

| 200 nm | EHT = 3.00 kV | Signal A = InLens | Date :20 May 2022 | ZEISS |
| | WD = 7.9 mm | Mag = 30.00 K X | Time :19:21:24 | |

**Figure 11**

**Figure 12**

**Figure 13**

**Figure 14**

## INTERNATIONAL SEARCH REPORT

| International application No. |
| --- |
| **PCT/CN2023/100450** |

**A. CLASSIFICATION OF SUBJECT MATTER**

C03B 27/03(2006.01)i; C03C 10/00(2006.01)i; C03C 10/02(2006.01)i

According to International Patent Classification (IPC) or to both national classification and IPC

**B. FIELDS SEARCHED**

Minimum documentation searched (classification system followed by classification symbols)

C03C; C03B

Documentation searched other than minimum documentation to the extent that such documents are included in the fields searched

Electronic data base consulted during the international search (name of data base and, where practicable, search terms used)

CNTXT; CNABS; DWPI; VEN; WPABS; CNKI; ELSEVIER: 微晶玻璃, 陶瓷玻璃, 深度, 尖晶石, 透明, 离子交换, 化学强化, 氧化硅, 氧化铝, 氧化锌, 氧化镁, 氧化锆, 氧化钠, microcrystalline glass, ceramic glass, depth, spinel, transparent, ion-exchanged, chemically strengthened, silicon dioxide, SiO2, aluminum oxide, Al2O3, zinc oxide, ZnO, magnesium oxide, MgO, zirconium oxide, ZrO2, sodium oxide, Na2O

**C. DOCUMENTS CONSIDERED TO BE RELEVANT**

| Category* | Citation of document, with indication, where appropriate, of the relevant passages | Relevant to claim No. |
| --- | --- | --- |
| X | CN 115286251 A (QINGYUAN CSG ENERGY SAVING NEW MATERIALS CO., LTD. et al.) 04 November 2022 (2022-11-04) description, paragraphs 54, 58, and 77-88 | 1-4, 6, 8-16 |
| Y | CN 115286251 A (QINGYUAN CSG ENERGY SAVING NEW MATERIALS CO., LTD. et al.) 04 November 2022 (2022-11-04) description, paragraphs 54, 58, and 77-88 | 5-19 |
| Y | CN 111615500 A (CORNING INC.) 01 September 2020 (2020-09-01) description, paragraphs 49-50, 78-82, and 90 | 5-19 |
| A | CN 105753329 A (JUSHI GROUP CO., LTD.) 13 July 2016 (2016-07-13) description, paragraph 76 | 1-19 |
| A | CN 112340998 A (CHONGQING XINJING SPECIAL GLASS CO., LTD.) 09 February 2021 (2021-02-09) claim 1 | 1-19 |

✓ Further documents are listed in the continuation of Box C.     ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 September 2023** | **20 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/100450**

| C. | DOCUMENTS CONSIDERED TO BE RELEVANT | |
|---|---|---|
| Category* | Citation of document, with indication, where appropriate, of the relevant passages | Relevant to claim No. |
| A | US 2002022564 A1 (OHARA KK) 21 February 2002 (2002-02-21)<br>entire document | 1-19 |

Form PCT/ISA/210 (second sheet) (July 2022)

**INTERNATIONAL SEARCH REPORT**
Information on patent family members

International application No.

**PCT/CN2023/100450**

| Patent document cited in search report | | | Publication date (day/month/year) | Patent family member(s) | | | Publication date (day/month/year) |
|---|---|---|---|---|---|---|---|
| CN | 115286251 | A | 04 November 2022 | None | | | |
| CN | 111615500 | A | 01 September 2020 | WO | 2019108876 | A1 | 06 June 2019 |
| | | | | US | 2019161397 | A1 | 30 May 2019 |
| | | | | US | 11192818 | B2 | 07 December 2021 |
| | | | | TW | 201927717 | A | 16 July 2019 |
| | | | | TWI | 794347 | B | 01 March 2023 |
| | | | | EP | 3717420 | A1 | 07 October 2020 |
| | | | | KR | 20200090235 | A | 28 July 2020 |
| | | | | JP | 2021505504 | A | 18 February 2021 |
| | | | | JP | 7336440 | B2 | 31 August 2023 |
| CN | 105753329 | A | 13 July 2016 | PT | 3406576 | T | 08 November 2021 |
| | | | | SI | 3406576 | T1 | 31 December 2021 |
| | | | | SA | 518391605 | B1 | 16 November 2021 |
| | | | | MX | 2018001033 | A | 09 November 2018 |
| | | | | BR | 112017027193 | A2 | 30 October 2018 |
| | | | | BR | 112017027193 | B1 | 03 May 2022 |
| | | | | DK | 3406576 | T3 | 11 October 2021 |
| | | | | PL | 3406576 | T3 | 17 January 2022 |
| | | | | KR | 20180011786 | A | 02 February 2018 |
| | | | | KR | 102001761 | B1 | 24 October 2019 |
| | | | | EP | 3909926 | A1 | 17 November 2021 |
| | | | | CL | 2018002633 | A1 | 04 January 2019 |
| | | | | EP | 3406576 | A2 | 28 November 2018 |
| | | | | EP | 3406576 | A4 | 23 October 2019 |
| | | | | EP | 3406576 | B1 | 15 September 2021 |
| | | | | ES | 2899985 | T3 | 15 March 2022 |
| | | | | JP | 2018517654 | A | 05 July 2018 |
| | | | | JP | 6487577 | B2 | 20 March 2019 |
| | | | | RU | 2018117560 | A3 | 11 November 2019 |
| | | | | RU | 2018117560 | A | 03 February 2020 |
| | | | | HRP | 20211579 | T1 | 24 December 2021 |
| | | | | CA | 2989206 | A1 | 20 October 2016 |
| | | | | CA | 2989206 | C | 07 July 2020 |
| | | | | HUE | 056355 | T2 | 28 February 2022 |
| | | | | AU | 2016248267 | A1 | 24 May 2018 |
| | | | | AU | 2016248267 | B2 | 02 January 2020 |
| | | | | WO | 2016165530 | A2 | 20 October 2016 |
| | | | | WO | 2016165530 | A3 | 02 February 2017 |
| | | | | US | 2018179104 | A1 | 28 June 2018 |
| | | | | US | 10377662 | B2 | 13 August 2019 |
| | | | | MA | 42575 | A1 | 31 October 2018 |
| | | | | MA | 42575 | B1 | 31 October 2019 |
| | | | | ZA | 201803244 | B | 30 January 2019 |
| CN | 112340998 | A | 09 February 2021 | None | | | |
| US | 2002022564 | A1 | 21 February 2002 | TWI | 255261 | B | 21 May 2006 |
| | | | | HK | 1040389 | B | 22 April 2005 |
| | | | | AT | 286491 | T | 15 January 2005 |
| | | | | KR | 20020003502 | A | 12 January 2002 |
| | | | | KR | 100439893 | B1 | 12 July 2004 |
| | | | | US | 7148164 | B2 | 12 December 2006 |

Form PCT/ISA/210 (patent family annex) (July 2022)

**INTERNATIONAL SEARCH REPORT**
Information on patent family members

International application No.

**PCT/CN2023/100450**

| Patent document cited in search report | Publication date (day/month/year) | Patent family member(s) | | Publication date (day/month/year) |
|---|---|---|---|---|
| | | KR | 20030086453 A | 10 November 2003 |
| | | KR | 100465214 B1 | 13 January 2005 |
| | | JP | 2002154841 A | 28 May 2002 |
| | | JP | 4704585 B2 | 15 June 2011 |
| | | DE | 60108206 D1 | 10 February 2005 |
| | | DE | 60108206 T2 | 08 December 2005 |
| | | EP | 1170262 A1 | 09 January 2002 |
| | | EP | 1170262 B1 | 05 January 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211666239

- CN 111615500 A